# EUROPEAN PATENT SPECIFICATION

(11) **EP 4 294 651 B1**
(45) Date of publication and mention of the grant of the patent: **19.08.2026**
(21) Application number: 22764066.1
(22) Date of filing: 03.03.2022
(51) Int. Cl.: B60C 25/04, B60C 25/01, B60C 25/02

(54) **TIRE INSTALLATION AND REMOVAL TOOL AND METHOD**
REIFENINSTALLATIONS- UND -ENTFERNUNGSWERKZEUG UND -VERFAHREN
OUTIL ET PROCÉDÉ D'INSTALLATION ET DE RETRAIT DE PNEU

(30) Priority: 03.03.2021 US 202163155800 P
(43) Date of publication of application: 27.12.2023
(73) Proprietor: CushCore, Inc., Bend OR 97701 (US)
(72) Inventor: KREFTING, Adam, Bend, Oregon 97701 (US)
(74) Representative: Isarpatent
(86) International application number: PCT/US2022/018735
(87) International publication number: WO 2022/187508

(56) References cited:
- DE-U1- 202013 009 387
- GB-A- 190 683
- US-A- 1 370 132
- US-A- 1 587 634
- US-A- 2 505 172
- US-A- 3 037 549
- US-A- 3 050 110
- US-A- 3 104 695
- US-A- 3 931 845
- US-A- 643 528
- US-A- 965 076
- US-A- 965 076
- US-B1- 6 237 666
- US-B1- 7 556 078

## Description

### TECHNICAL FIELD

The present invention relates generally to an apparatus used to install and remove pneumatic tires on rims, and more particularly to a tire installation and removal apparatus that is especially suited for installing a pneumatic bicycle tire, typically a tubeless pneumatic tire, on a rim, and removing the tire from the rim. The apparatus according to the invention may be used to install and remove any bicycle tire from a rim, including tires that utilize a tire insert.

### BACKGROUND OF THE INVENTION

Mounting a bicycle tire on a rim can sometimes be challenging. There are many variables that play into the difficulty of the process, including for instance the stiffness of the tire casing, the tire bead material, the dimensions of the tire and the rim, whether the tire is tubeless or tubed, and the installer's technique. Regardless of the particular situation, many cyclists are eventually able to acquire the skills necessary to successfully mount tires on their wheels, and this is important because as any cyclist knows, flat tires happen with some regularity and the cyclist is usually forced to repair the problem in the field.

Some types of tires are notoriously difficult to install on rims. For instance, tires that have stiff sidewall casings, such as tires specifically made for downhill mountain bike racing, can be difficult to install even for riders who have a lot of experience.

Recently, tire inserts for pneumatic bicycle tires such as those sold under the brand name CUSHCORE^{®} have become very popular because they improve tire performance characteristics and increase reliability. CUSHCORE^{®} tire inserts are protected by several US patents, including US patent Nos. 10,286,736, 10,293,640, and 10,787,043, each of which is assigned to the assignee of the present application. While CUSHCORE^{®} inserts provide substantial performance improvements, some cyclists find tire installation more difficult when inserts are installed. Numerous instructional videos posted online provide step by step guidance for easing the installation process, but there are also videos that discuss the difficulty of installing the inserts. As with bicycle tires that do not include inserts, cyclists eventually are able to install CUSHCORE^{®} tire inserts on their bicycle rims without a struggle.

Given the difficulties that some users have experienced with installing tires on rims, adding to that the difficulties some users experience installing CUSHCORE^{®} inserts, and taking into account the proven advantages CUSHCORE^{®} inserts provide, there is a need for a tool that facilitates installation and removal of tires on rims, including where a tire insert will be installed with the tires. Moreover, bicycle manufacturers are beginning to offer CUSHCORE^{®} inserts installed as original equipment (OEM) on the tires that are sold with new mountain bikes. This requires that the bicycle manufacturers install the tire inserts on many thousands of wheels, so there is an economic incentive to ease the installation of the tires with inserts on the wheels, and to increase the speed at which the tires with the inserts are mounted. Bicycle shops, mountain resorts, and rental fleets also mount many tires, so they need a tool that eases installation.
GB 190683 A describes a hand-tool for mounting and removing automobile tires, wherein the tool is composed of a square lever having one end suitably apertured to provide for the accommodation of a hinge bent at right angles, the lower part of the hinge has a hole to fit a bolt provided with a wing-nut, a portion of the other end of the lever is rounded in order to allow an easy grip to the operator of same, a plate, having at one end a square aperture shaped in conformity with the cross-sectional area of the lever, is provided at the other end, and at right angles thereto, with a projection of which the lower part is curved to fit the bead of the wheel-rim.

US 3931845 A describes a device for removing from and replacing a tire, particularly a motorcycle tire, on a rim, comprising a placement member linked to one portion of a telescoping housing and an adjustably positionable tang linked to a further portion of the body.

US 643528 A describes an appliance for removing from and replacing on rim-pneumatic cycle-tires.

US 2505172 A describes a device for removing and replacing a tire on a vehicle rim.

US 1587634 A describes tire tools for use in connection with pneumatic automobile tires, and especially such tires as the clincher or similar type which are mounted on a continuous uncut rim.

US 965076 A describes a tool for facilitating the attachment and detachment of pneumatic tires.

### SUMMARY OF THE INVENTION

The present invention defines a novel and unique apparatus and method for installing bicycle tires on rims and removing tires from rims, both with and without tire inserts. The invention is useful to cyclists, mechanics, and companies who desire a faster and easier way to mount and unmount tires with or without tire inserts.

The present invention features a tire installation and removal apparatus that greatly eases the process of installing and removing a tire (e.g., a bicycle tire) from a rim, especially when a tire insert is used. The apparatus comprises an axle that is received in and securely attached to the wheel's hub. A handle is pivotally attached to the axle and a tire removal and installation head is slidably located on the handle. One side of the tire removal and installation head is used to facilitate tire installation, and the opposite side of the tire removal and installation head is used to facilitate tire removal.

The invention is set out in the appended set of claims. The present invention provides an apparatus for installing and removing a tire having tire beads on a wheel having a hub and a rim with a rim flange and a rim well according to claim 1.

Some implementations of the apparatus include one or more of the following features.

The second side of the head may include a tire bead wheel configured to push the tire bead into the rim well, and the handle is mounted to be rotated by a user about the hub so that the wheel travels around the rim. The second side may further include a tire bead hook configured to hold the apparatus against the rim during rotation of the handle. The tire bead wheel may be rotatably mounted on the head and includes a frustoconical surface positioned for contact with the tire. The second side of the head may further comprise a rim alignment tab disposed adjacent the tire bead wheel and configured to position the apparatus so that the tire bead wheel is slightly offset from the rim so that is does not generate friction by dragging on the rim.

The hub attachment member may comprise an axle with first and second ends, the first end of the axle attached to the handle and a second end having an axle retainer thereon. The first end of the axle may include a conical hub seat, and the axle retainer may include a conical hub seat. The axle retainer may be configured to be removably mounted on the second end to securely retain the axle within the hub.

The second side of the head may include a portion configured to support one of the tire beads away from the rim during installation of a tire insert into the rim.

A portion of the handle along which the head slides may have a square cross-section. The head may be fixed in position along the handle by a clamping mechanism comprising spring-biased clamping plates that apply a clamping force to the handle.

Further aspects and embodiments are directed to methods of installing tires on wheels and methods of removing tires from wheels. Some implementations of the methods may include one or more of the following features.

The present invention provides a method of installing a tire having first and second tire beads on a wheel having a hub and a rim with a rim flange and a rim well according to claim 12.

Positioning the head may include sliding the head along the handle.

The method may further comprise using the apparatus to insert a tire insert into an interior of the tire, prior to positioning the portion of the second tire bead under the rim flange. The tire bead wheel may have a frustoconical surface and inserting the tire insert may include rotating the apparatus around a circumference of the rim such that a main body of the head pushes the insert radially outward past the rim flange and the frustoconical surface presses the tire insert over the rim flange and into the interior of the tire.

The method may further comprise seating the tire bead hook under the bead such that the tire bead hook holds the apparatus down during the rotating step.

The present invention provides a method of removing a tire having tire beads from a wheel having a hub and a rim with a rim flange and a rim well according to claim 17.

Using the tire bead wheel to unseat the tire bead may include pressing down on the handle to press the tire bead wheel against the tire bead and rotating the handle around a circumference of the wheel to cause an outer surface of the tire bead wheel to apply pressure against a wall of the tire to unseat the tire bead and force the tire bead into the rim well.

The method may further comprise the steps of removing the apparatus from the wheel and re-mounting it with the first side of the head in contact with a second side of the rim and using the tire bead wheel to unseat a second bead of the tire to push the second bead into the rim well, prior to the pivoting step.

The method may further comprise using a tire lever to lift the tire bead onto the tire removal horn by levering the tire lever against the lever platform.

The present invention provides a method of removing a first tire having tire beads from a wheel having a hub and a rim with a rim flange and a rim well and installing a second tire onto the wheel according to claim 21.

In certain examples, the method may further comprise using the apparatus to insert a tire insert into an interior of the second tire. In one example, wherein the tire wheel has a frustoconical surface, inserting the tire insert may include rotating the apparatus around a circumference of the rim such that a main body of the head pushes the insert radially outward past the rim flange and the frustoconical surface presses the tire insert over the rim flange and into the interior of the second tire.

In certain examples, the first and second tires may be the same tire. For example, the apparatus can be used to remove a tire, which is then repaired and re-installed on the wheel according to the methods disclosed herein.

Various implementations of the methods may use embodiments of the apparatus disclosed herein, and various steps may be repeated as necessary to install and/or remove tires and/or tire inserts from the wheel.

Still other aspects, embodiments, and advantages of these exemplary aspects and embodiments are discussed in detail below. Embodiments and implementations disclosed herein may be combined with other embodiments and implementations in any manner consistent with at least one of the principles disclosed herein.

### BRIEF DESCRIPTION OF THE DRAWINGS

FIG. 1 is a perspective view of the tire installation and removal apparatus according to one implementation.
FIG. 1A is a perspective view of the apparatus shown in FIG. 1 taken from a different angle.
FIG. 2 is a cut-away perspective view of the tire installation and removal apparatus shown in FIG. 1, mounted on a rim in the orientation used to install the tire (and an insert if one is to be installed) on the rim.
FIG. 2A is an enlarged detail view showing the interaction of the apparatus with the rim in the orientation shown in FIG. 2.
FIG. 3 is a cut-away perspective view of the tire installation and removal apparatus shown in FIG. 1 with the handle flipped over such that the apparatus is mounted on a rim in the orientation used to remove the tire from the rim after the bead is broken.
FIG. 3A is an enlarged detail perspective view of the tire removal horn of the apparatus interacting with the rim.
FIG. 3B is a cut-away perspective view of the tire removal horn interacting with the rim.
FIG. 4 is cross-sectional view of the axle and axle retainer assembly and a portion of the handle installed in a wheel hub, with the rest of the wheel and apparatus omitted for clarity.
FIG. 5 is a perspective cross-sectional view of the axle retainer mounted on a lower portion of the axle.
FIG. 6 is a cross-sectional view of the apparatus taken along line 6-6 in FIG. 1.
FIG. 7 is an enlarged detail view of area A in FIG. 6.
FIG. 7A is an enlarged detail view of the clamping mechanism shown in FIG. 7.
FIG. 8 is a cut away perspective view of the apparatus head, showing the stabilizing set screws.
FIG. 8A is a planar view of FIG. 8.
FIG. 9 is a diagrammatic view in partial cross-section, showing a tire bead beginning to interact with the rim flange of a wheel rim.
FIG. 9A is similar to FIG. 9 but shows the tire bead wheel pushing the bead into the rim well of the rim.
FIG. 10 is a perspective view showing the interaction between the tire bead and the apparatus, with the remainder of the tire omitted for clarity.
FIG. 10A is a planar view of FIG. 10.
FIG. 11 is a perspective view showing the positioning of a tire lever against the lever platform of the apparatus.
FIG. 11A is a cross-sectional view showing the interaction of the tire lever and lever platform.
FIG. 12 is a cross-sectional view of a tire lever being inserted between a tire bead and the rim flange of a rim.
FIG. 12A shows the tire lever engaging the level platform to lift the bead over the rim flange.
FIG. 12B shows the bead resting on the tire removal horn, with the tire lever removed.
FIG. 13 is a perspective view showing an insert being inserted into the rim, with the tire omitted for clarity.
FIG. 13A is a side view showing the insert being inserted.
FIG. 14 is an alternative view of the insert being inserted.
FIG. 14A is similar to FIG. 14 but shows the tire bead wheel interacting with the insert.
FIG. 15 is a cross-sectional view of a tire and insert installed on a rim.
FIG. 16 is cross-sectional view of a tire loosely installed on a rim, with both beads outside of the rim.
FIG. 17A is a cross-sectional view of an insert being installed, with one bead of the tire in the rim and the other supported by a surface of the apparatus.
FIG. 17B is similar to FIG. 17A but shows the rim supported by a different location on the apparatus surface.

### DETAILED DESCRIPTION

One implementation of the tire installation and removal apparatus will now be described in detail with reference to the drawings. It will be understood that relative directional terms are used at times to describe components of the invention and relative positions of the parts. As a naming convention, the ground plane is considered to be a horizontal surface and relative directional terms correspond to this convention. With this convention, "upper" refers to the direction above and away from the ground plane; "lower" is generally in the opposite direction, "inward" is the direction from the exterior toward the interior of a component of the invention; for instance, the direction from the tire rim toward the tire hub is "inward." "Vertical" is the direction normal to the horizontal ground plane, and so on.

### Apparatus Structure

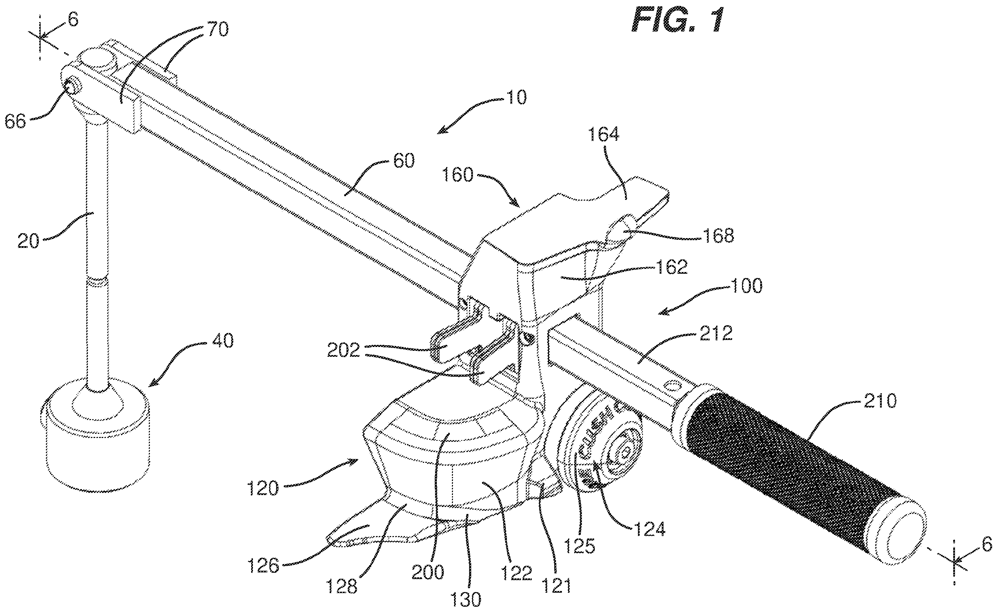

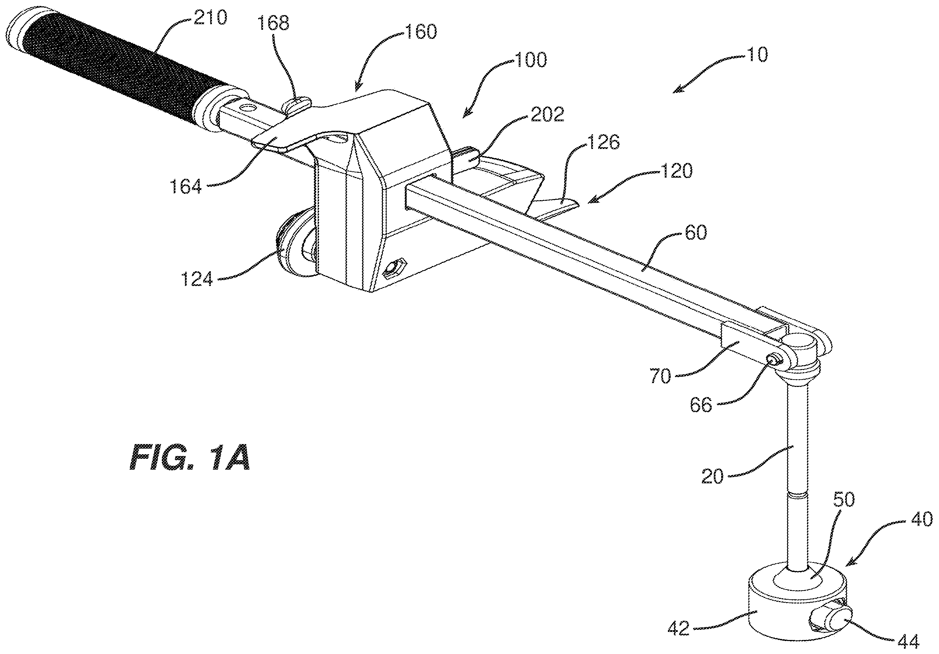

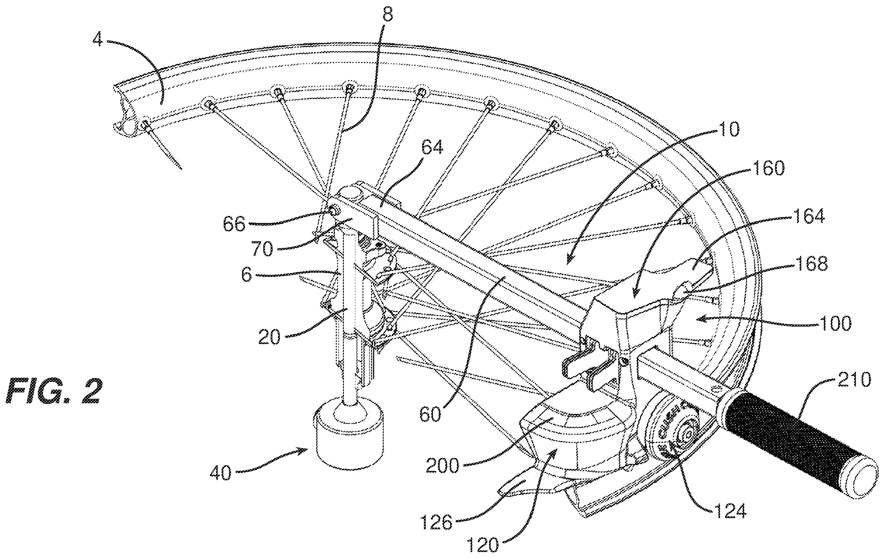

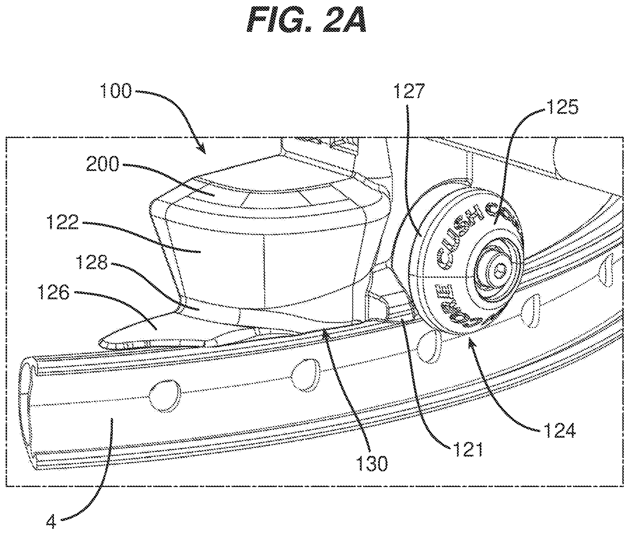

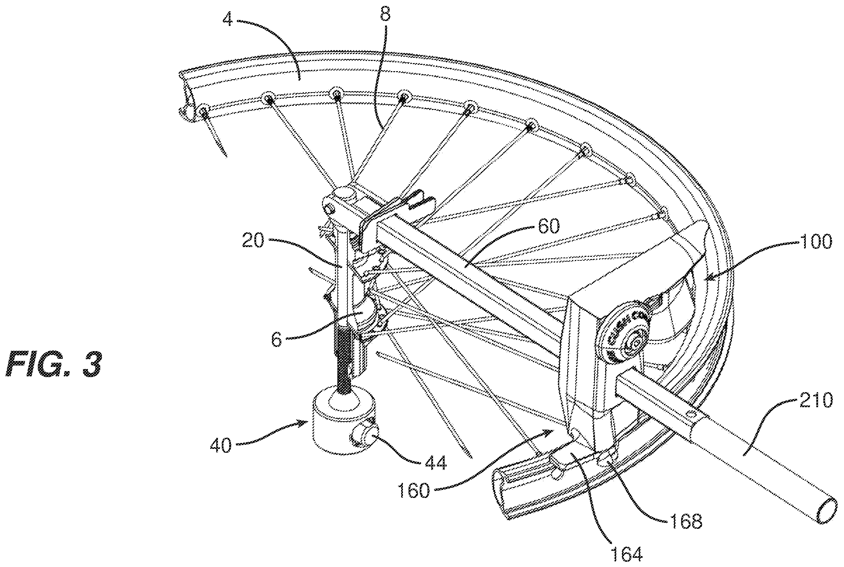

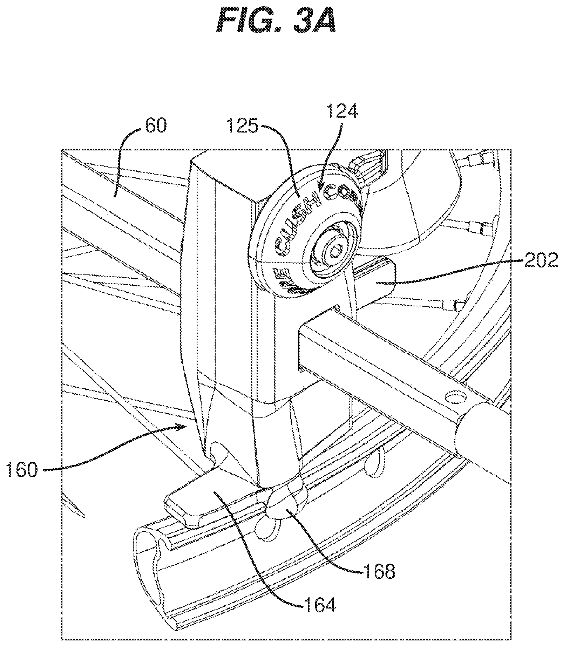

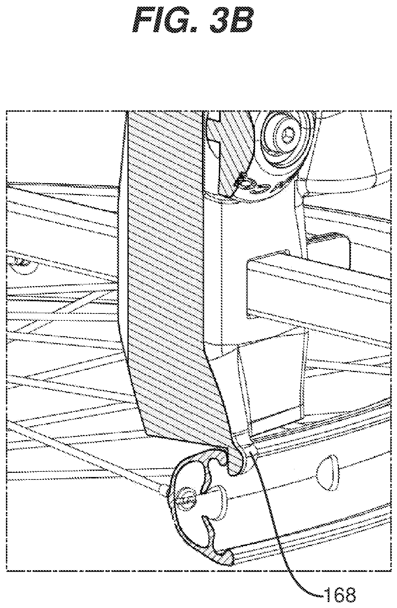

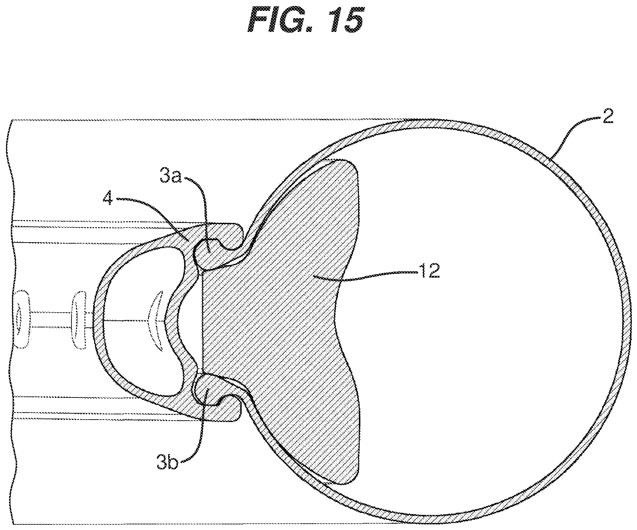

**FIGS. 1** and **1A** show a tire installation and removal apparatus 10 according to one implementation. Referring to **FIG. 2****,** the apparatus 10 is used to install a bicycle tire 2 (**FIG. 15**) on a rim 4 of a wheel that is built up in a conventional manner with a hub 6 interconnected to the rim 4 with spokes 8. The hub is conventional and includes an axle through-hole that is normally used to mount the wheel on a bicycle. The apparatus 10 includes an axle 20 that is configured to be received through the through-hole in the hub to secure the apparatus 10 to the wheel, an axle retainer 40 that is mounted on axle 20 to retain the axle in the hub, a handle 60 pivotably mounted on the axle 20, and a tire installation and removal head 100. The tire installation and removal head 100 includes a first side 120 and a second side 160. The pivotal mounting of the handle allows the removal head to be easily flipped between a position in which the first side of the apparatus interacts with the rim (**FIG. 2**) and a position in which the second side of the apparatus interacts with the rim (**FIG. 3**).

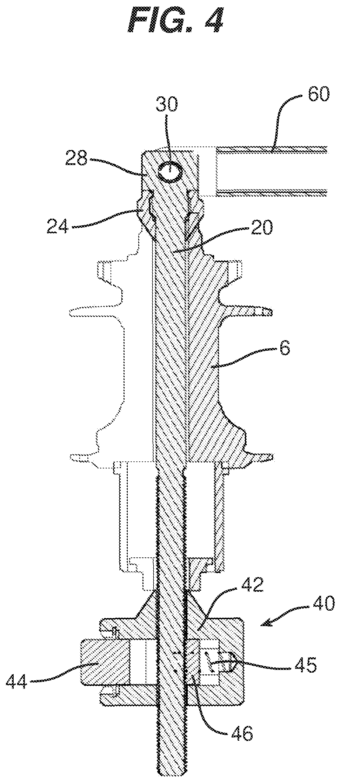

Referring to **FIG. 4****,** axle 20 includes a rod that is at least partially threaded and is of sufficient length so that it may be inserted completely through the hub of the wheel (as shown in **FIGS. 2** and **3**) with enough threaded length remaining to attach the axle retainer 40 to the threaded portion of the axle and to allow the position of the axle retainer to be adjusted to accommodate different hub sizes. In the implementation shown, the axle 20 is only partially threaded, at the end to which the axle retainer is attached. If desired, in other implementations the axle may be threaded along its entire length. The threads are generally of a smaller diameter (e.g., 10mm) than the smallest inner diameter (through-axle size, e.g., 12mm) of the through-hole of the hub. This is to avoid contact between the threads and the hub so that insertion of the axle does not damage the hub finish. The proximal end of axle 20 has a frustoconical attachment 24 that nests in the hub when the axle is inserted into the through-hole of the hub. The frustoconical attachment 24 is a ring-shaped part that fits around the axle diameter. The frustoconical attachment 24 is fabricated from plastic, or a similar material that is softer than the material from which the hub is manufactured, to avoid damage to the hub. In some implementations the frustoconical attachment 24 may be designed so that it is threaded onto the axle. The frustroconical shape of the attachment 24 allows the axle to fit a wide range of bike hub inner diameters (e.g., 12-20mm, common for mountain bike hubs).

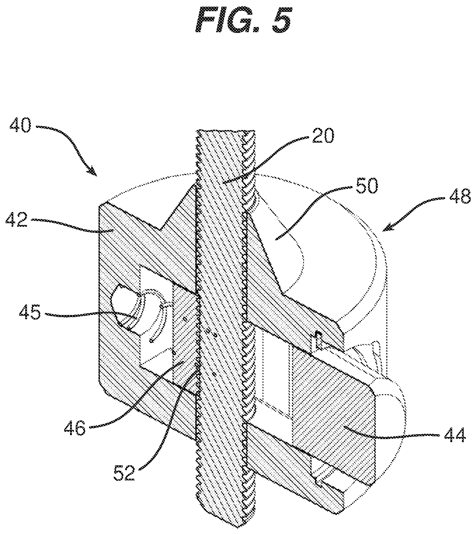

Turning to **FIG. 5****,** the axle retainer 40 is a generally cylindrical member 42 with a central bore that receives the axle 20. It will be appreciated that the geometry of the axle retainer could be other than cylindrical. The axle retainer 40 includes a spring-loaded movable portion 46, an axle-facing surface of which is threaded at 52 and which defines the threaded portion of the otherwise-smooth central bore. A button 44 is pressed by the user to move the portion 46 away from the bore, allowing the axle retainer 40 to be slid onto the threaded end of the axle 20. When the button 44 is released the threads of the portion 46 immediately engage the threads of the rod due to the action of spring 45. The retainer may be removed from the rod by pushing the button to disengage the threads. This allows the axle retainer to be positioned on axle 20 very quickly by pressing the button and then the frustoconical extension 50 can be quickly secured to the hub bore by the user rotating the axle retainer sufficiently to tension the threads and lock the axle retainer to the hub. The axle retainer 40 is removed from the rod just as quickly. The user can rotate the axle retainer enough to remove the tension on the threads (e.g., about a ¼ turn or a ½ turn), and push the button 44 to disengage the threads and remove the axle retainer from the axle 20. The interior end 48 of axle retainer 40 defines the frustoconical extension 50 which nests in the bore through hub 6 when the axle 20 is installed in the wheel as shown in **FIG. 4****.** The cylindrical member 42 has a relatively large diameter so that it is easy to grasp and manipulate, and which when threaded into position at the base of the hub very securely attaches the axle 20 to the hub 6.

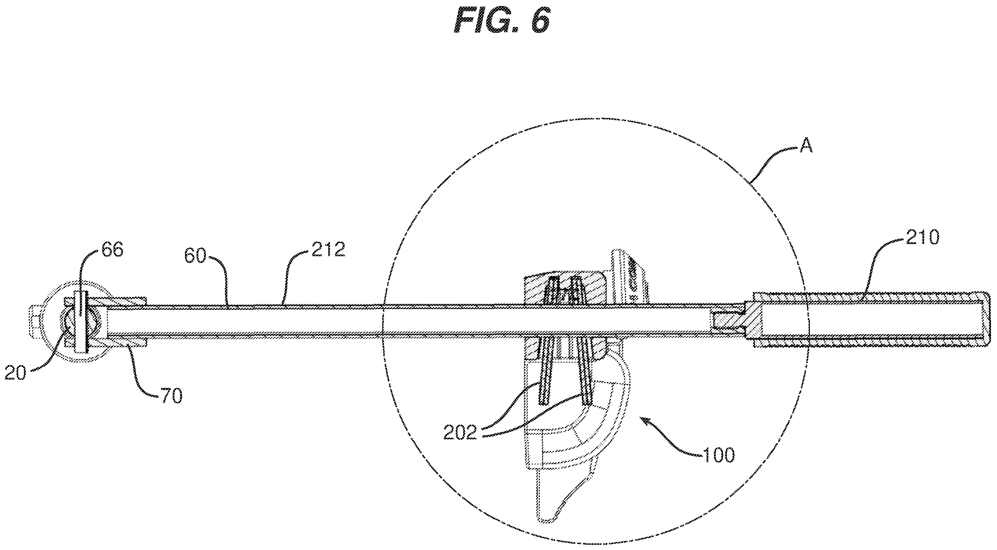

Immediately adjacent the frustoconical attachment 24 on axle 20 is a shaft section 28 with a cross hole 30 (**FIG. 4**). Referring to **FIGS. 2** and **6****,** handle 60 is pivotally attached at its inboard end 64 to axle 20 with a pin 66 that extends through aligned bores in a yoke 70 and through the cross hole 30 of axle 20. In the implementation shown the pin 66 is a spring pin that expands to fill the concentric bores to eliminate undesirable movement in the pivot that could interfere with the ease of use of the head 100 and/or degrade the functionality of the apparatus.

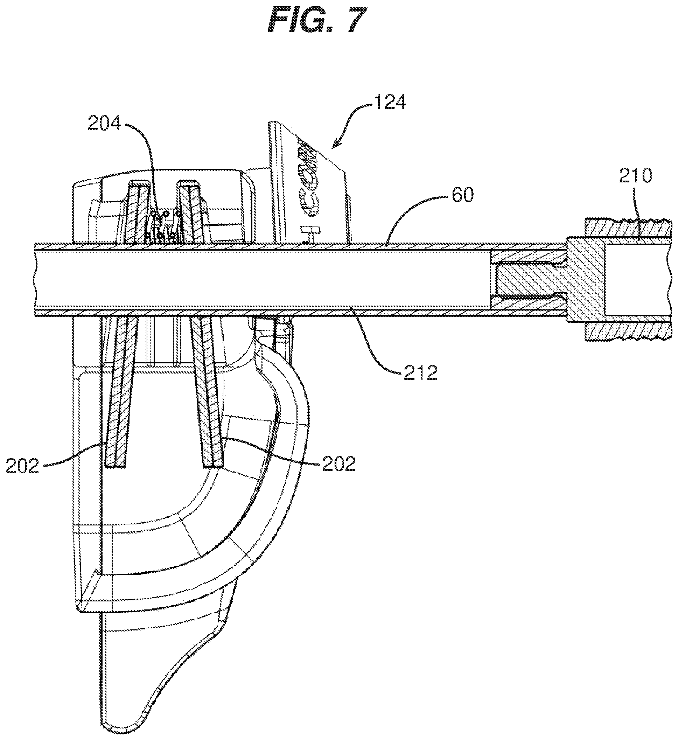

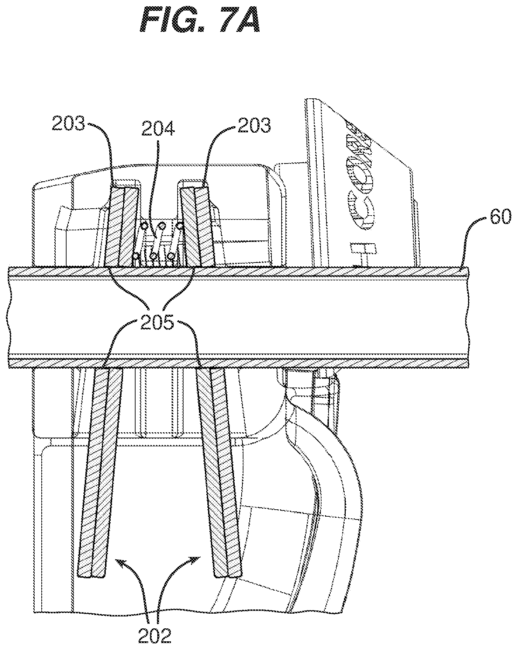

This pivotal attachment of handle 60 to axle 20 allows the handle 60 to be pivoted 180 degrees about the attachment, between the positions shown in **FIGS. 2** and **3****.** The pivotal interconnection between the handle 60 and the axle 20 is important and controls the degrees of freedom in the handle. Specifically, the handle can only pivot around the axle in one axis of movement so that it controls the torque the tire applies to the apparatus head. The handle is preferably of a two-part construction, as shown in **FIG. 6****,** allowing it to have a rectangular cross section along a major portion of its length (to facilitate the sliding attachment of head 100, described below) and a circular cross-section where the user grasps the handle, providing an ergonomic gripping portion 210. The gripping portion 210 is threaded into an end of the rectangular portion 212 as shown in **FIG. 7****.** The handle is removable for assembly, storage, and transportation.

The tire removal and installation head 100 (referred to generally as head 100) is mounted on handle 60, as shown in **FIG. 1****.** The head 100 is slidably mounted on handle 60 and may be fixed in any desired position on the handle (the position in which the head 100 contacts the rim). There are many different wheel sizes on the market, with the distance from the axial center of the hub 6 to the rim 4 being different for different wheel sizes. The ability to slide head 100 to the desired position on handle 60, and fix the head at that position, allows the apparatus 10 to be used with all adult bicycle wheel sizes. Referring to **FIGS. 1****,** **7** and **7A****,** to accomplish this sliding adjustment the apparatus 10 includes a pair of clamping plates 202, which extend out of the head 100 as shown in **FIG. 1****.** As shown in **FIGS. 7** and **7A****,** the plates 202 include square bores through which the square portion of handle 60 extends. The plates 202 are biased towards the angled position shown in **FIGS. 7** and **7A****,** in which distal edges of the plates press against the ends of a spring 204. In this locked position there is insufficient clearance between the square bores in the plates 202 and the outer surface of the handle for the plates to slide on the handle and the head is thus locked in place along the length of the handle. The angle of the plates (which may be about 5 degrees in certain examples) eliminates clearance with the handle in the locked position, and the fulcrum points 203 cause the edges 205 to clamp the handle in position. The spring 204 is confined side-to-side by the handle and pocket geometry shown in **FIG. 7A****.** The plate pair shown on the left in **FIG. 7A** prevents the handle from sliding to the left, and the pair of plates on the right prevents the handle from sliding to the right. When the user presses the exposed parts of the plates together, against the spring force, this action causes the square bores in the plates to align, providing just enough clearance between the bores and the handle to slide the clamping plates (and thus the head 100) along the length of the handle. When the user releases the pressure, the spring 204 biases the plates 202 back to the angled position shown in **FIGS. 7** and **7A****,** in which there is a clamping force generated between the bores in the plates and the handle due to the angle of the plates, as discussed above. If a force is applied to move the head without pressing the clamping plates together it just increases the angle of the plates, which increases the clamping force, and the clamping plates continue to hold the head firmly in place. Thus, the geometry provides a self-reinforcing clamping mechanism.

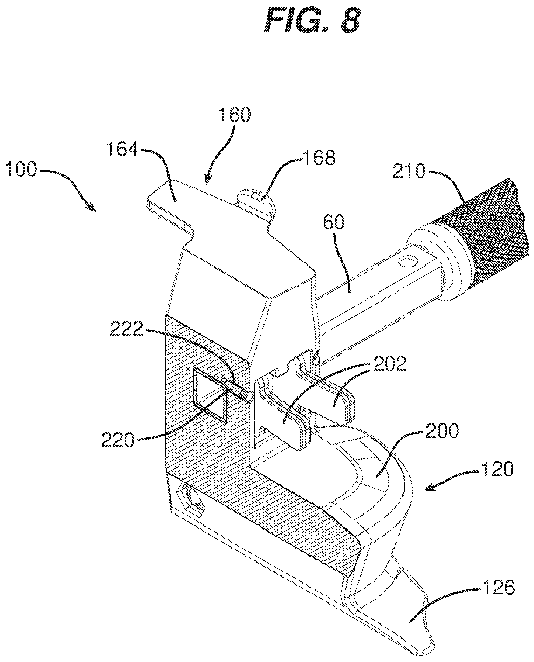

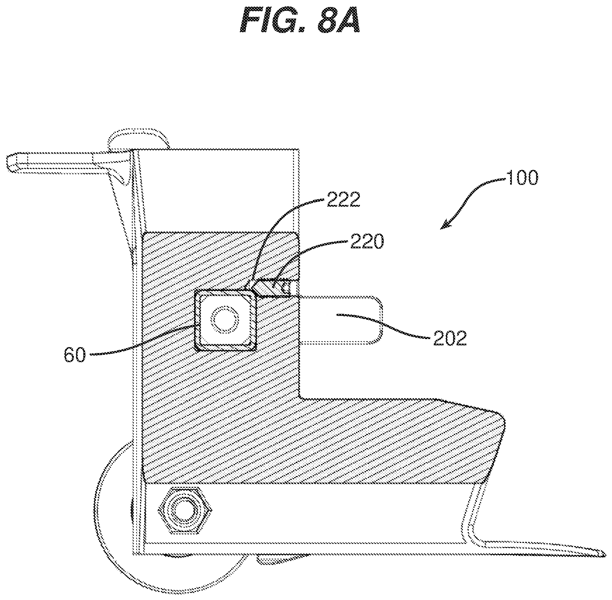

Referring now to **FIGS. 8** and **8A****,** a pair of conical set screws 220 are provided on each lateral side of the clamping plates 202. Conical set screws are positioned in threaded bores 222 of the head 100, which are directly above the square bore through which the handle 60 passes. The user can adjust the set screws 220 against the adjacent corner of the handle 60, as shown in **FIG. 8A****,** to remove excess rotational movement of the head 100 about the handle 60 during use, while still allowing the head 100 to slide along the handle 60 when the clamping plates 202 are depressed by the user.

Head 100 has two distinct sides, each with different operational functions, positioned on opposite sides of the head. The first side 120 of head 100 is used in the installation process and also used in an initial step of the removal process as will be described below. The second side 160 of head 100 is used in the removal process. It will be appreciated from review of the drawings that the apparatus 10 may be pivoted around the pin 66 so that either side of the head 100 may be presented to the rim, quickly enabling the functions unique to each side of the head 100. **FIG. 2** shows an example of an orientation in which the first side 120 is presented to and operable on the rim 4, and **FIG. 3** shows an example of an orientation in which the second side 160 is presented to and operable on the rim 4. The user can quickly switch the head 100 between the two orientations by pivoting the handle 60 about its pivotal attachment to axle 20 as described above.

Referring to **FIG. 1****,** **FIG. 2A****,** and **FIG. 10****,** the first side 120 of head 100 includes a main body 122 upon which is mounted a tire bead wheel 124, and which includes a tire bead hook 126. As will be described in further detail below, the main body 122 of the first side 120 forces the bead radially outward past the rim flange, then the wheel 124 presses the bead down below the flange into the rim, to properly seat the tire on the rim during installation. The generally plate-shaped tire bead hook 126 extends forwardly from the main body 122 and rides on the outer surface of the rim 4 during use. A bead guide 128 and a bead exit region 130 are located at the junction of the tire bead hook 126 and main body 122, as shown in **FIG. 2A****,** the functions of which will be described below when tire installation is described in detail.

The second side 160 of head 100 includes a main body 162 that has a lever platform 164 that slides on the outer surface of the rim 4 during use, and a tire removal horn 168. As will be described below in detail in the Tire Removal section, the tire removal horn 168 is used during tire removal to retain the tire beads 3 and to guide them out and around the flange of the rim.

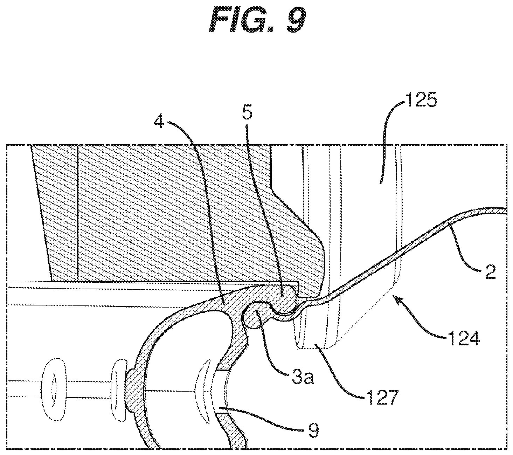

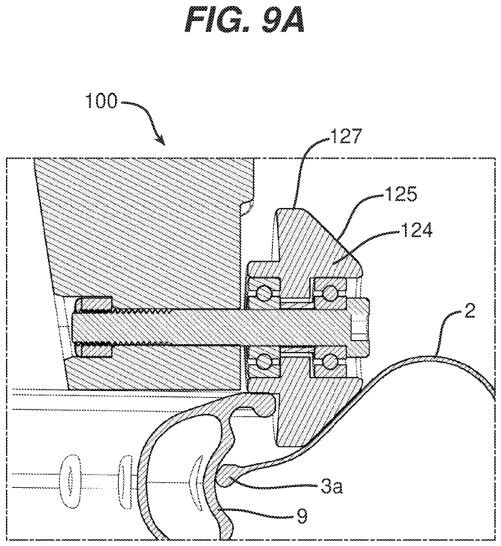

The tire bead wheel 124 is bolted to the head 100 as shown in **FIG. 9A** such that it can rotate during use. Wheel 124 has a frustoconical surface 125 that is configured to contact the tire bead 3 at the correct angle for installation/removal, and a flat circumferential side surface 127. The tire bead wheel 124 is positioned adjacent a rim alignment tab 121 that is used to align the head 100 to the rim when the head slides on the handle 60. The rim alignment tab 121 sets the apparatus in position to ensure that the tire bead wheel 124 is slightly offset from the rim 4 such that is does not generate friction by dragging on the rim.

The shape of the tire bead wheel 124 is configured based on requirements for different tasks for which the wheel is used to allow the wheel to function for all of these tasks. In early stages of a tire install (when the bead is not under tension), the circumferential side surface 127 and the frustoconical surface 125 press against the entire sidewall of the tire. A large contact area between the tire bead wheel 124 and the tire is desired at this stage because the tire is so loose on the wheel. If the tire bead wheel 124 were too narrow, the tire would not stay in position under the wheel and could not be guided into the rim 4. In later stages of a tire install (when the bead is under tension), a narrow tire bead wheel 124 better concentrates force directly on the tire bead. This reduces the force required to "drop the bead" into the rim well. At this stage, the bead is under enough tension that it can stay in position under a narrow wheel and most of the pressure comes from the circumferential side surface 127. In a first step in the removal process, which includes breaking the bead, a narrow tire bead wheel 124 would again be preferable for the same reasons as in the later stages of a tire install. The circumferential side surface 127 of the wheel 124 is primarily responsible for breaking the bead prior to tire removal. Thus, the width and shape of the tire bead wheel may be selected based on a compromise between the need for a narrower wheel in some circumstances, and a wide wheel in others. The frustoconical surface 125 is also used during an insert install to facilitate moving the insert from above the rim plane downward into the tire. The smaller diameter section of the wheel 124 is designed to roll on the rim 4. This reduces friction under load. The contact force between the head 100 and the rim 4 can be significant in two situations: (1) to break the bead, the user must apply downward pressure on the handle while rotating it, and (2) In the final stages of tire installation, the bead is positioned over the tire bead hook 126. As bead tension increases, it exerts more and more downward pressure on the tire bead hook 126, squeezing it (and the entire apparatus head) against the rim 4. While this pressure is a benefit, it does increase friction, which the wheel 124 reduces substantially.

### Tire Installation

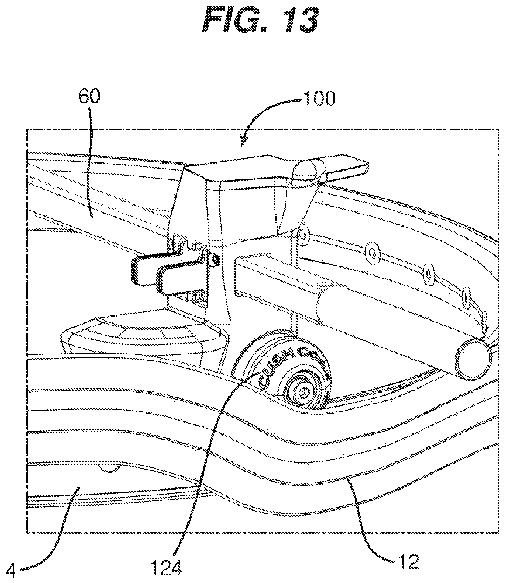

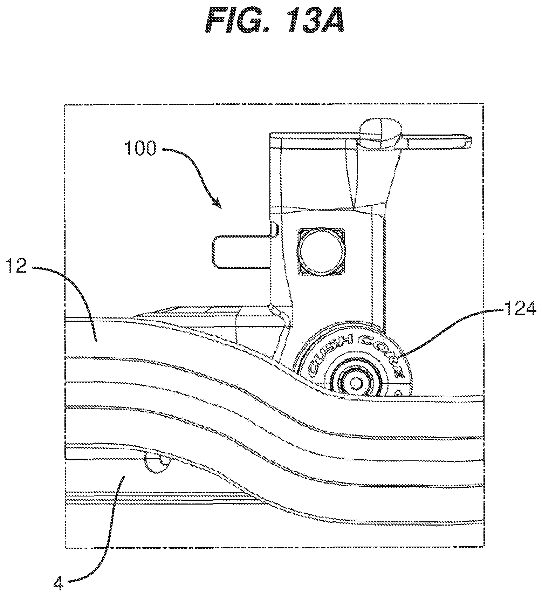

The process for installing a tire insert 12 and a tire 2 on a rim will now be explained with reference to **FIGS. 9-10A** and **13-15.** It is noted that in **FIGS. 13-14A****,** showing insert installation, the tire is omitted for clarity. Some steps, which will be clear to the reader without illustration, are not shown in the drawings.

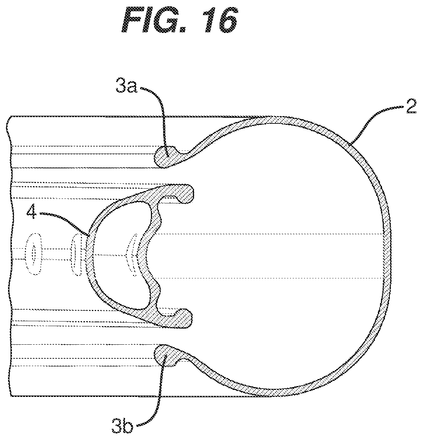

Initially, the tire 2 is loosely assembled with the rim 4 such that the tire is around the rim, but both beads 3a, 3b are outside the rim 4 (as shown in **FIG. 16**). A next step is to install the first bead 3a. After this step, one bead 3a of the tire is over the rim flange 5 (**FIG. 9**) of the rim. This step can generally be done by hand, e.g., using a tire lever in a conventional manner, or may be done using the apparatus according to the method described below. If a tire insert 12 is to be installed, a portion of the insert 12 (about 50%) is then loosely inserted by hand into the tire interior (**FIG. 15**). If desired, the interior of the tire casing may be lubricated to reduce friction between the insert and tire casing during installation (for example, by spraying soapy water into the tire).

The apparatus 10 is attached to the wheel assembly (i.e., hub 6, rim 4, spokes 8) by threading the axle 20 through the through-hole of the hub 6 and securing the axle retainer 40 to the distal end of the axle. The apparatus and wheel are then set on a good support (for example, the open end of a garbage can or other receptacle). The user pivots handle 60 so that the first side 120 is facing the rim and tire, as shown in **FIG. 2****,** and presses clamping plates 202 together to slide the head 100 along the handle 60 to a point at which the rim alignment tab 121 contacts the rim 4 and the head 100 is aligned with the rim 4. The user then releases the clamping plates 202 so that the head 100 is fixed at the desired position on handle 60 to accommodate the diameter of the wheel upon which the tire is being mounted.

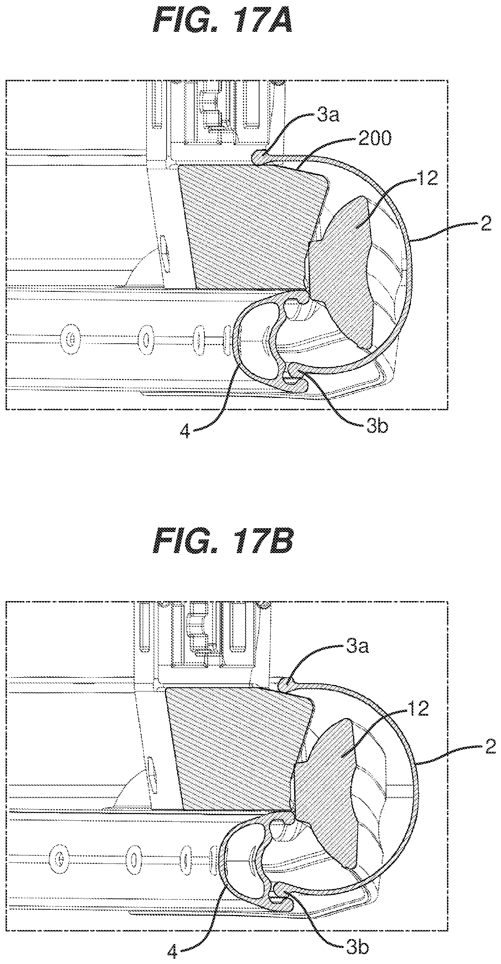

With the installation apparatus 10 adjacent to the tire 2 and the insert 12 under light tension, the user positions the tire bead 3a such that the bead is draped over surface 200 (**FIG. 1**) of the head 100. As shown in **FIGS. 17A** and **17B****,** surface 200 holds the tire clear of the insert 12 so it does not interfere with installation. This also ensures the force exerted by the apparatus is directed into the insert rather than into the tire. If desired, the tire bead can be lubricated before or during insertion (e.g., with soapy water).

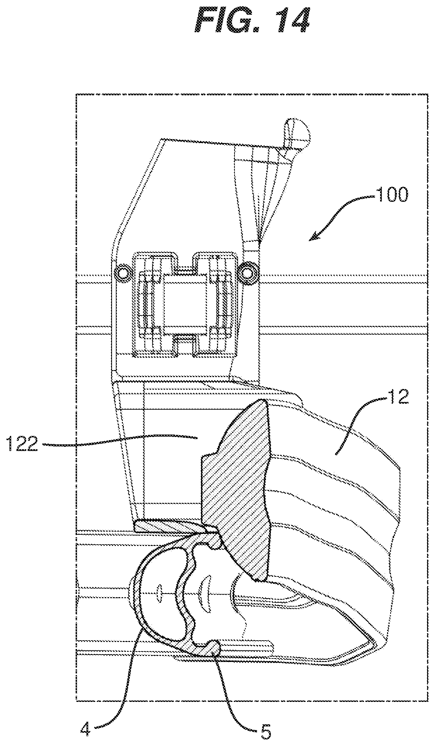

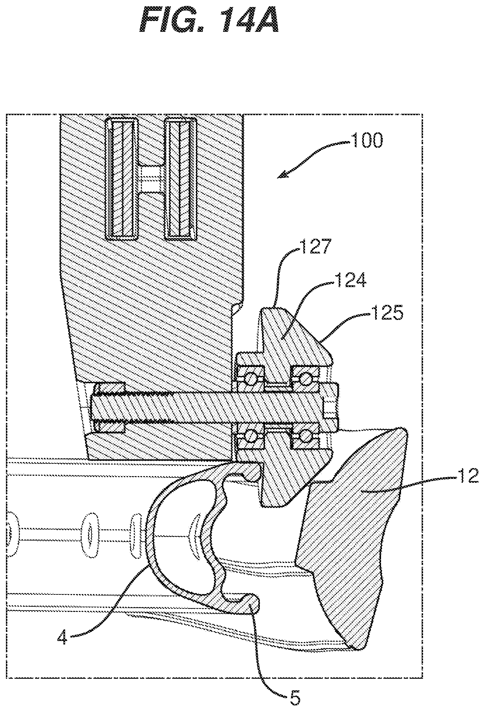

Next, the apparatus is rotated around the circumference of the rim. Referring to **FIGS. 14** and **14A****,** the main body 122 of head 100 pushes the insert 12 radially outwardly past the rim flange 5, and the frustoconical surface 125 of the wheel 124 presses the insert over the rim flange 5 so that it is moving into the seated position. After a full rotation of apparatus 10 around the wheel, the insert 12 is fully inserted into the tire interior.

The second bead 3b of tire 2 is now ready for seating on the rim 4. The user first manually rolls the tire sidewall outward so that a small portion of the bead 3b may be inserted under the rim flange by the user. The apparatus head 100 is placed on the rim 4 where the tire bead 3b has been inserted into the rim. Apparatus 10 remains in the position along the handle in which it was previously set and locked (the correct position for the wheel diameter), such that it is now positioned with wheel 124 just beyond the rim flange 5 of rim 4 and the tire bead hook 126 positioned between the rim and the tire. The user presses handle 60 downwardly and begins rotating the handle as the wheel 124 presses tire bead 3b over the rim flange 5. The tire bead hook 126 helps hold the head 100 down onto the rim flange, due to tension exerted by the tire bead. During the initial part of installation, when the bead is not under tension, it may be necessary for the user to press the tool downward onto the rim face. As discussed above, at this stage the frustoconical surface 125 is used to apply pressure to the bead. As installation progresses, tension on the tire bead increases. This tension exerts a downward force on the tire bead hook 126, holding the apparatus against the rim face with little or no downward force required from the user. At this stage most of the pressure comes from the side surface 127 of the wheel 124, rather than from the frustoconical surface 125.

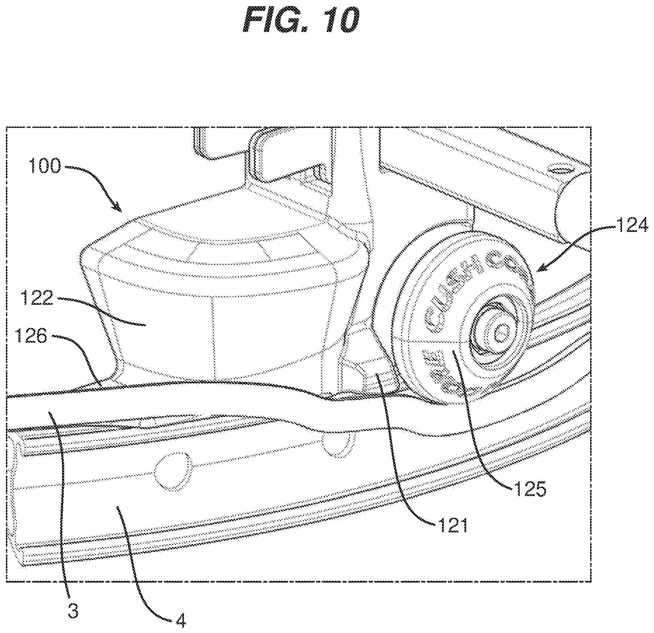

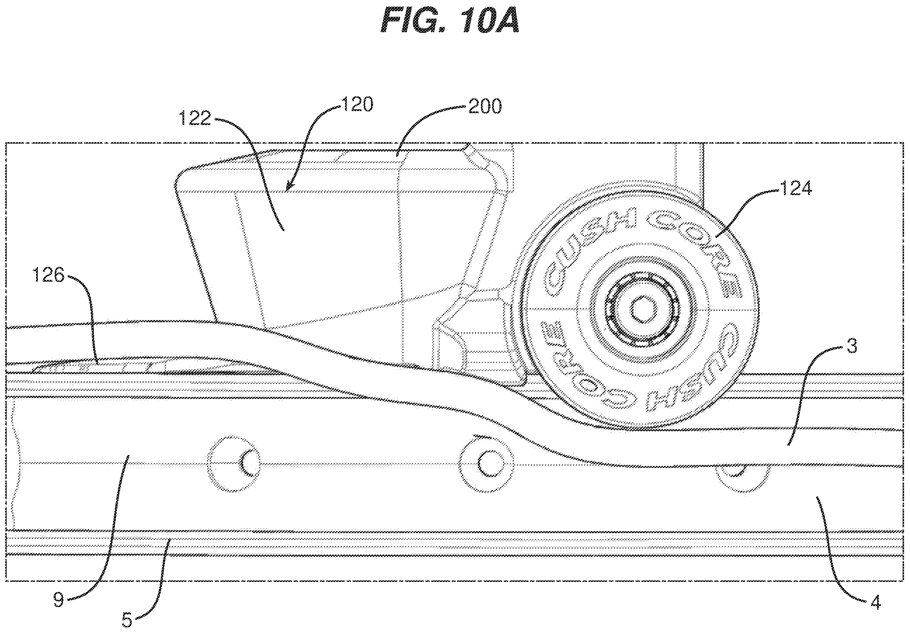

The user continues to rotate handle 60 around the wheel. As the handle rotates, the tire bead 3 is pressed radially outward by the main body 122 of first side 120 of the head 100, guided by the bead guide 128 of the edge of the tire bead hook 126. This is shown diagrammatically in **FIGS. 10** and **10A****,** in which only the bead 3 of the tire is shown for clarity. **FIGS. 10** and **10A** show the position of the tire bead 3 when the bead is almost fully installed (e.g., about 90% installed). Earlier in the installation process, the bead 3 wraps around more of the bead guide 128 than is shown in **FIGS. 10** and **10A****.** The bead guide 128 pushes the bead radially outward such that the bead is extending over rim flange 5 (**FIG. 9**). As rotation of apparatus 10 continues, the bead separates from the apparatus body at bead exit region 130 of the tire bead hook 126 and wheel 124 presses the bead further inward into the rim well 9 (in the lateral center of the rim) as shown in **FIGS. 9A** and **10A****.** The bead can then move into a seated position. The bead 3 is seated on the "bead seat" when the tire 2 is inflated - the air pressure from inflation of the tire pops the bead 3 into position. Note that the tire is inflated after the installation process is complete. In certain instances, the tire is installed and seated on the rim with one complete rotation of apparatus 10 around the wheel. In other instances, the bead 3 may require more help into the rim well 9. In such instances, the user may reverse the rotation direction of the tire bead wheel 124 to counterclockwise and backtrack across the installed portion of the bead 3, applying downward pressure so that the tire bead wheel 124 forces the bead 3 into the rim well 9. Once the installed portion of the bead 3 is fully in the rim well 9, the user may once again rotate the wheel 124 in the clockwise direction and complete installation of the tire.

### Tire Removal

Use of the apparatus 10 to remove a tire 2 (and optionally a tire insert, if used) from a rim 4 will be explained with reference to **FIGS. 3A****,** **3B** and **11****-12B.**

Apparatus 10 is first attached to the built-up wheel. Thus, the operational axle for the wheel is removed and axle 20 is inserted through the axle opening in the hub 6 and the axle retainer is slid onto the shaft of axle 20 and positioned tightly against the hub. As noted above, the frustoconical attachment 24 on one end of axle 20 in combination with the frustoconical extension 50 on the axle retainer serve to retain the apparatus firmly in position in the hub.

The user places the wheel horizontally on a good working support. The user slides head 100 along handle 60 as described above and adjusts the position of the head so that the head is aligned with the rim, in this case with the tire removal horn contacting the rim, and releases the clamping plates to fix the head in place. **FIGS. 3A** and **3B** show detailed views of an example of the tire removal horn interacting with the rim.

First, the apparatus is positioned with the first side 120 contacting the rim, as shown in **FIG. 2****.** This allows the wheel 124 to be used to "break the bead", unseating the tire bead from its seated position on the rim. The user does this by pressing down on the handle so that wheel 124 is pressing against the bead while rotating the handle around the circumference of the wheel. The side surface 127 of the wheel 124 is configured to apply sufficient pressure against the tire wall to break the bead. As the wheel 124 pressed down on the bead 3a, the interconnection between the bead and the rim seat is broken very effectively, forcing the bead off the bead seat 11 and all the way into the rim well 9.

The rim well 9 has a smaller diameter than the bead seat 11, so pushing the bead into the rim well gives the user additional slack, i.e., to grab the bead 3a with a tire lever 230 as detailed below. The bead 3a has a fixed diameter with only very minimal ability to stretch. The bead seat 11 is about the same diameter as the tire bead, so when the tire bead 3a is on the bead seat 11 the tire is fixed in position. When the bead 3a is forced into the smaller diameter rim well 11 the tire can move slightly laterally relative to the rim. This allows the installer to manipulate the bead over the rim flange 5.

The user can then flip the wheel over, reinstall the apparatus 10, and use the wheel to break the bead on the other side of the tire.

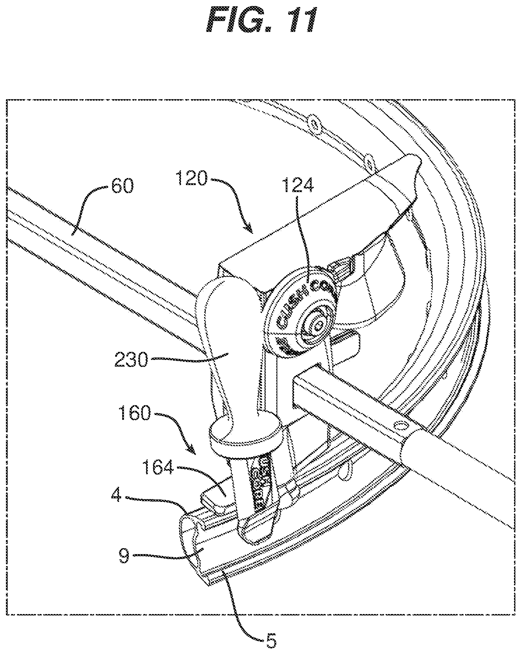

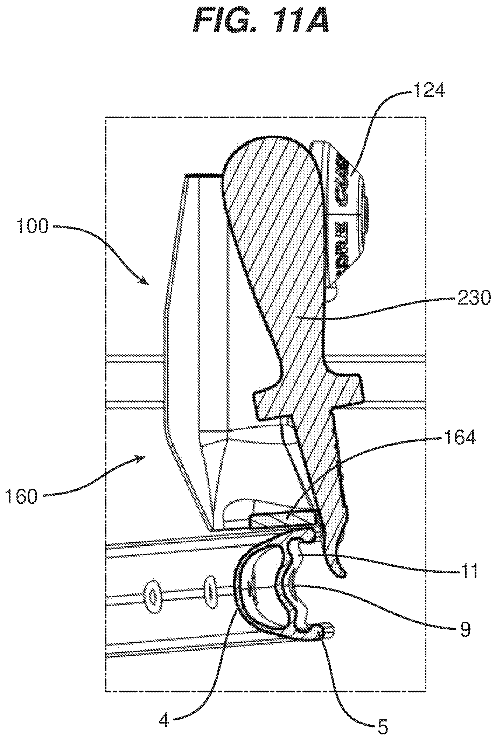

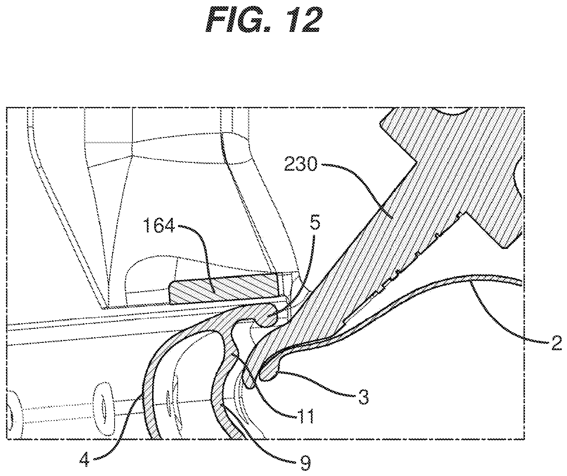

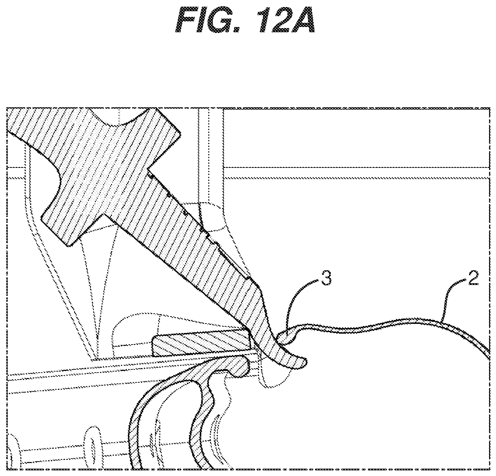

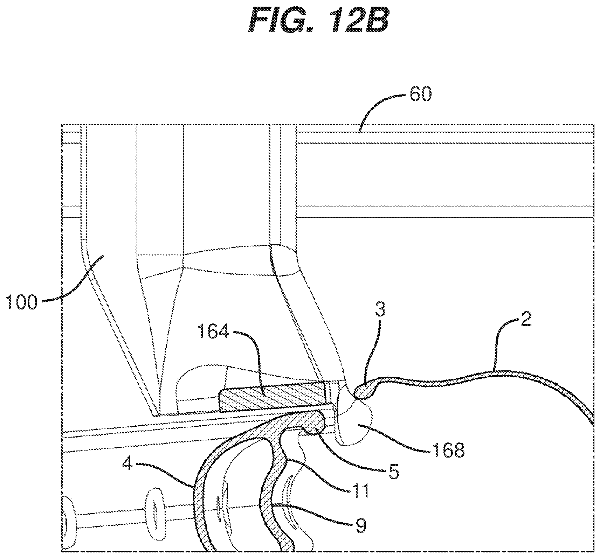

The apparatus 10 is then pivoted 180 degrees so that the second side 160 of the head 100 is facing the tire 2, as shown in **FIG. 3****.** In this position the lever platform 164 on the second side 160 of the head 100 is lying on the outer surface of rim 4. A conventional tire lever 230 is used to pry off one section of the bead 3a from the rim 4. The tire lever 230 is positioned in front of the lever platform 164 and adjacent to the tire removal horn (**FIG. 11A**), which changes the fulcrum of the tire lever 230, enabling the tire bead to be installed onto the tire removal horn 168 (**FIG. 12A**). Using the tire lever, the user pries bead 3a away from the rim and upward until bead 3a rests on tire removal horn 168.

The apparatus 10 is then rotated, and as rotation continues the tire removal horn 168 separates the bead 3a from the seated position in rim 4 and lifts the bead over the rim flange 5 to demount the bead. The tire removal horn is shaped to move the bead in a circular path up and over the rim flange 5 to reduce friction and minimize the risk of tire damage caused by contact between the bead and the potentially sharp rim flange during removal.

At this stage, the other bead 3b of the tire is still installed. To remove the other bead 3b, the user removes the axle, flips the wheel over and re-installs the axle. The user then repeats the removal process using the apparatus on the second bead 3b. The insert and tire are now loose and can be removed from the wheel by hand.

The apparatus greatly simplifies the process of installing tires on rims and speeds up the process. While the apparatus 10 is especially designed for use with tires that will include an insert 12, the apparatus works equally well with tires that do not include an insert.

### Other Embodiments

While the present invention has been described in terms of preferred and illustrated embodiments, it will be appreciated by those of ordinary skill that the scope of the invention is not limited to those embodiments but extend to the various modifications as defined in the appended claims.

For example, in addition to the yoke connection of the handle to the axle described above, there are numerous other means possible to connect the handle to the axle while restricting movement to the desired axis. Moreover, the handle may be a single part, rather than the two-part construction described above, and may be rectangular, cylindrical, or any desired combination of geometries.

Moreover, while the first side and second side are typically part of a single integrally molded head 100, as shown and described above, if desired they may be molded as separate parts and interconnected with appropriate fasteners to form an assembled head.

Additionally, instead of angled surface 200 of the first side 120 of the head 100 it will be appreciated that other types of "hangers" may be used to hold up the tire, for example a molded protrusion extending from the main body 122 of first side 120.

Having described above various aspects and examples of at least one embodiment, it is to be appreciated various alterations, modifications, and improvements will readily occur to those skilled in the art. Such alterations, modifications, and improvements are intended to be part of this invention and are intended to be within the scope of the invention as defined by the appended claims. Accordingly, the foregoing drawings are by way of example only.

## Claims

1. Apparatus (10) for installing and removing a tire (2) having tire beads (3, 3a, 3b) on a wheel having a hub (6) and a rim (4) with a rim flange (5) and a rim well (9), the apparatus (10) comprising:
a hub attachment member for securing the apparatus (10) to the wheel through the hub (6);
a handle (60) having a first end pivotally attached to the hub attachment member; and
a head (100) fixable at a desired position along the handle (60), the head (100) including a first side (120) having one or more features configured to push the tire bead (3, 3a, 3b) axially outward relative to the hub (6), and a second side (160) having one or more features configured to push the tire bead (3, 3a, 3b) into the rim well (9), wherein pivoting of the handle (60) relative to the hub (6) selectively positions the first side (120) or the second side (160) for interaction with the rim flange (5),
wherein the first side (120) includes a tire removal horn (168) configured to guide the tire (2) radially outward and around the rim flange (5), and
the first side (120) further includes a lever platform (164) configured to assist a user with lifting the tire bead (3, 3a, 3b) onto the tire removal horn (168) using a tire lever (230).

2. The apparatus (10) of **claim 1** wherein the second side (160) includes a tire bead wheel (124) configured to push the tire bead (3, 3a, 3b) into the rim well (9) and the handle (60) is mounted to be rotated by a user about the hub (6) so that the wheel travels around the rim (4).

3. The apparatus (10) of **claim 2** wherein the second side (160) further includes a tire bead hook (126) configured to hold the apparatus (10) against the rim (4) during rotation of the handle (60).

4. The apparatus (10) of **claim 2** wherein the tire bead wheel (124) is rotatably mounted on the head (100) and includes a frustoconical surface (125) positioned for contact with the tire (2).

5. The apparatus (10) of **claim 2** wherein the second side (160) further comprises a rim alignment tab (121), disposed adjacent the tire bead wheel (124), configured to position the apparatus (10) so that the tire bead wheel (124) is slightly offset from the rim (4) so that is does not generate friction by dragging on the rim (4).

6. The apparatus (10) of **claim 1** wherein the hub attachment member comprises an axle (20) with first and second ends, the first end of the axle (20) attached to the handle (60) and the second end having an axle retainer (40) thereon.

7. The apparatus (10) of **claim 6** wherein the first end of the axle (20) includes a conical hub seat, and the axle retainer (40) includes a conical hub seat.

8. The apparatus (10) of **claim 6** wherein the axle retainer (40) is configured to be removably mounted on the second end to securely retain the axle (20) within the hub (6).

9. The apparatus (10) of **claim 1** wherein the second side (160) includes a portion configured to support one of the tire beads (3, 3a, 3b) away from the rim (4) during installation of a tire insert (12) into the rim (4).

10. The apparatus (10) of **claim 1** wherein a portion of the handle (60) along which the head (100) slides has a square cross-section.

11. The apparatus (10) of **claim 9** wherein the head (100) is fixed in position along the handle (60) by a clamping mechanism comprising spring-biased clamping plates (202) that apply a clamping force to the handle (60).

12. A method of installing a tire (2) having first and second tire beads on a wheel having a hub (6) and a rim (4) with a rim flange (5) and a rim well (9), the method comprising:
mounting an apparatus (10) on the wheel, the apparatus (10) including a hub attachment device for securing the apparatus (10) to the wheel through the hub (6), a handle (60) pivotably mounted on the hub attachment device, and a head (100) slidably mounted on the handle (60), the head (100) including a first side (120) having a tire bead wheel (124), and a tire bead hook (126);
orienting and positioning the head (100) with the first side (120) facing the rim (4) and the tire (2);
inserting the first tire bead into the rim (4);
positioning a portion of the second tire bead under the rim flange (5) and positioning the apparatus (10) with the tire bead wheel (124) beyond the rim flange (5) and the tire bead hook (126) between the rim (4) and the tire (2); and
rotating the handle (60) to cause the tire bead wheel (124) to rotate and press the second tire bead into the rim (4),
wherein the head (100) further includes a rim alignment tab (121) and orienting and positioning includes positioning the head (100) such that the rim alignment tab (121) is in contact with the rim (4).

13. The method of **claim 12** wherein positioning the head (100) includes sliding the head (100) along the handle (60).

14. The method of **claim 12** further comprising using the apparatus (10) to insert a tire insert (12) into an interior of the tire (2), prior to positioning the portion of the second tire bead under the rim flange (5).

15. The method of **claim 14** wherein the tire bead wheel (124) has a frustoconical surface (125) and wherein inserting the tire insert (12) includes rotating the apparatus (10) around a circumference of the rim (4) such that a main body (122) of the head (100) pushes the tire insert (12) radially outward past the rim flange (5) and the frustoconical surface (125) presses the tire insert (12) over the rim flange (5) and into the interior of the tire (2).

16. The method of **claim 12** further comprising seating the tire bead hook (126) under the tire bead (3, 3a, 3b) such that the tire bead hook (126) holds the apparatus (10) down during the rotating step.

17. A method of removing a tire (2) having tire beads (3, 3a, 3b) from a wheel having a hub (6) and a rim (4) with a rim flange (5) and a rim well (9), the method comprising:
mounting an apparatus (10) on the wheel, the apparatus (10) including a hub attachment device for securing the apparatus (10) to the wheel through the hub (6), a handle (60) pivotably mounted on the hub attachment device, and a head (100) slidably mounted on the handle (60), the head (100) having a first side (120) including a tire bead wheel (124) and a second side (160) including a lever platform (164) and tire removal horn (168);
positioning the apparatus (10) with the first side (120) of the head (100) contacting a first side (120) of the rim (4) and using the tire bead wheel (124) to unseat a first tire bead from the rim (4);
pivoting the apparatus (10) about the handle (60) to position the second side (160) of the head (100) facing the tire (2) with the lever platform (164) contacting an outer surface of the rim (4);
moving the tire bead (3, 3a, 3b) away from the rim (4) and onto the tire removal horn (168); and
rotating the apparatus (10) to cause the tire removal horn (168) to lift the tire bead (3, 3a, 3b) over the rim flange (5).

18. The method of **claim 17** wherein using the tire bead wheel (124) to unseat the tire bead (3, 3a, 3b) includes pressing down on the handle (60) to press the tire bead wheel (124) against the tire bead (3, 3a, 3b) and rotating the handle (60) around a circumference of the wheel to cause an outer surface of the tire bead wheel (124) to apply pressure against a wall of the tire (2) to unseat the tire bead (3, 3a, 3b) and force the tire bead (3, 3a, 3b) into the rim well (9).

19. The method of **claim 18** further comprising the steps of removing the apparatus (10) from the wheel and re-mounting it with the first side (120) of the head (100) in contact with a second side of the rim (4) and using the tire bead wheel (124) to unseat a second bead of the tire (2) to push the second bead into the rim well (9), prior to the pivoting step.

20. The method of **claim 17** further comprising using a tire lever (230) to lift the tire bead (3, 3a, 3b) onto the tire removal horn (168) by levering the tire lever (230) against the lever platform (164).

21. A method of removing a first tire having tire beads (3, 3a, 3b) from a wheel having a hub (6) and a rim (4) with a rim flange (5) and a rim well (9) and installing a second tire onto the wheel, the method comprising:
(a) removing the first tire by:
mounting an apparatus (10) on the wheel, the apparatus (10) including a hub attachment device for securing the apparatus (10) to the wheel through the hub (6), a handle (60) pivotably mounted on the hub attachment device, and a head (100) slidably mounted on the handle (60), the head (100) having a first side (120) including a tire bead wheel (124) and a second side (160) including a lever platform (164) and tire removal horn (168);
positioning the apparatus (10) with the first side (120) of the head (100) contacting the rim (4) and using the tire bead wheel (124) to unseat a tire bead (3, 3a, 3b) from the rim (4);
removing the apparatus (10) from the wheel and re-mounting it with the first side (120) of the head (100) in contact with a second side of the rim (4) and using the tire bead wheel (124) to unseat a second bead of the first tire to push the second bead into the rim well (9);
pivoting the apparatus (10) about the handle (60) to position the second side (160) of the head (100) facing the first tire with the lever platform (164) contacting an outer surface of the rim (4);
moving the tire bead (3, 3a, 3b) away from the rim (4) and onto the tire removal horn (168); and
rotating the apparatus (10) to cause the tire removal horn (168) to lift the tire bead (3, 3a, 3b) over the rim flange (5); and
removing the first tire from the wheel; and
(b) installing the second tire by:
orienting and positioning the head (100) with the first side (120) facing the rim (4) and the second tire and the rim alignment tab (121) in contact with the rim (4);
inserting the first tire bead into the rim (4);
positioning a portion of the second tire bead under the rim flange (5) and positioning the apparatus (10) with the tire bead wheel (124) beyond the rim flange (5) and the tire bead hook (126) between the rim (4) and the tire (2); and
rotating the handle (60) to cause the tire bead wheel (124) to rotate and press the second tire bead into the rim (4).

## Patentansprüche

1. Vorrichtung (10) zum Montieren und Demontieren eines Reifens (2), der Reifenwülste (3, 3a, 3b) aufweist, an einem Rad, das eine Nabe (6) und eine Felge (4) mit einem Felgenflansch (5) und einem Felgenbett (9) aufweist, wobei die Vorrichtung (10) umfasst:
ein Nabenanbringungselement zum Befestigen der Vorrichtung (10) an dem Rad mittels der Nabe (6);
einen Griff (60), der ein erstes Ende aufweist, das an dem Nabenanbringungselement angelenkt ist; und
einen Kopf (100), der an einer gewünschten Position entlang des Griffs (60) fixierbar ist, wobei der Kopf (100) eine erste Seite (120) aufweist, die eine oder mehrere Ausformungen aufweist, die dazu eingerichtet sind, die Reifenwulst (3, 3a, 3b) relativ zu der Nabe (6) axial nach außen zu drücken, und eine zweite Seite (160) aufweist, die eine oder mehrere Ausformungen aufweist, die dazu eingerichtet sind, die Reifenwulst (3, 3a, 3b) in das Felgenbett (9) zu drücken, wobei ein Schwenken des Griffs (60) relativ zu der Nabe (6) selektiv die erste Seite (120) oder die zweite Seite (160) für eine Interaktion mit dem Felgenflansch (5) positioniert,
wobei die erste Seite (120) ein Reifendemontagehorn (168) aufweist, das dazu eingerichtet ist, den Reifen (2) radial nach außen und um den Felgenflansch (5) herum zu führen, und
die erste Seite (120) des Weiteren eine Hebelplattform (164) aufweist, die dazu eingerichtet ist, einen Benutzer beim Heben der Reifenwulst (3, 3a, 3b) auf das Reifendemontagehorn (168) unter Verwendung eines Montiereisens (230) zu unterstützen.

2. Vorrichtung (10) nach Anspruch 1, wobei die zweite Seite (160) ein Reifenwulstrad (124) aufweist, das dazu eingerichtet ist, die Reifenwulst (3, 3a, 3b) in das Felgenbett (9) zu drücken, und der Griff (60) so montiert ist, dass er durch einen Benutzer um die Nabe (6) herum gedreht werden kann, damit das Rad um die Felge (4) herum fährt.

3. Vorrichtung (10) nach Anspruch 2, wobei die zweite Seite (160) des Weiteren einen Reifenwulsthaken (126) aufweist, der dazu eingerichtet ist, die Vorrichtung (10) während der Drehung des Griffs (60) gegen die Felge (4) zu halten.

4. Vorrichtung (10) nach Anspruch 2, wobei das Reifenwulstrad (124) drehbar an dem Kopf (100) montiert ist und eine kegelstumpfförmige Fläche (125) aufweist, die für einen Kontakt mit dem Reifen (2) positioniert ist.

5. Vorrichtung (10) nach Anspruch 2, wobei die zweite Seite (160) des Weiteren eine Felgenausrichtungsnase (121) aufweist, die neben dem Reifenwulstrad (124) angeordnet ist und dazu eingerichtet ist, die Vorrichtung (10) so zu positionieren, dass das Reifenwulstrad (124) ein wenig von der Felge (4) versetzt ist, damit es nicht durch Entlangrollen an der Felge (4) Reibung generiert.

6. Vorrichtung (10) nach Anspruch 1, wobei das Nabenanbringungselement eine Achse (20) mit einem ersten und einem zweiten Ende umfasst, wobei das erste Ende der Achse (20) an dem Griff (60) angebracht ist und das zweite Ende einen Achsenhalter (40) aufweist.

7. Vorrichtung (10) nach Anspruch 6, wobei das erste Ende der Achse (20) einen konischen Nabensitz aufweist und der Achshalter (40) einen konischen Nabensitz aufweist.

8. Vorrichtung (10) nach Anspruch 6, wobei der Achsenhalter (40) dazu eingerichtet ist, abnehmbar an dem zweiten Ende montiert zu werden, um die Achse (20) sicher innerhalb der Nabe (6) zu halten.

9. Vorrichtung (10) nach Anspruch 1, wobei die zweite Seite (160) einen Abschnitt aufweist, der dazu eingerichtet ist, einen der Reifenwülste (3, 3a, 3b) während der Montage eines Reifeneinsatzes (12) in die Felge (4) von der Felge (4) fort zu stützen.

10. Vorrichtung (10) nach Anspruch 1, wobei ein Abschnitt des Griffs (60), an dem entlang der Kopf (100) gleitet, einen quadratischen Querschnitt aufweist.

11. Vorrichtung (10) nach Anspruch 9, wobei der Kopf (100) entlang des Griffs (60) durch einen Klemmmechanismus in seiner Position fixiert ist, der federvorbelastete Klemmplatten (202) aufweist, die eine Klemmkraft an den Griff (60) anlegen.

12. Verfahren zum Montieren eines Reifens (2), der eine erste und eine zweite Reifenwulst aufweist, an einem Rad, das eine Nabe (6) und eine Felge (4) mit einem Felgenflansch (5) und einem Felgenbett (9) aufweist, wobei das Verfahren umfasst:
Montieren einer Vorrichtung (10) an dem Rad, wobei die Vorrichtung (10) eine Nabenanbringungsvorrichtung zum Befestigen der Vorrichtung (10) an dem Rad mittels der Nabe (6), einen Griff (60), der an der Nabenanbringungsvorrichtung angelenkt ist, und einen Kopf (100), der verschiebbar an dem Griff (60) montiert ist, aufweist, wobei der Kopf (100) eine erste Seite (120), die ein Reifenwulstrad (124) aufweist, und einen Reifenwulsthaken (126) aufweist;
Ausrichten und Positionieren des Kopfes (100) so, dass die erste Seite (120) der Felge (4) und dem Reifen (2) zugewandt ist;
Einsetzen der ersten Reifenwulst in die Felge (4);
Positionieren eines Abschnitts der zweiten Reifenwulst unter dem Felgenflansch (5), und Positionieren der Vorrichtung (10) so, dass sich das Reifenwulstrad (124) jenseits des Felgenflansches (5) befindet und der Reifenwulsthaken (126) sich zwischen der Felge (4) und dem Reifen (2) befindet; und
Drehen des Griffs (60), um das Reifenwulstrad (124) zu veranlassen, sich zu drehen und die zweite Reifenwulst in die Felge (4) zu drücken,
wobei der Kopf (100) des Weiteren eine Felgenausrichtungsnase (121) aufweist, und das Ausrichten und Positionieren das Positionieren des Kopfes (100) in einer solchen Weise umfasst, dass die Felgenausrichtungsnase (121) mit der Felge (4) in Kontakt steht.

13. Verfahren nach Anspruch 12, wobei das Positionieren des Kopfes (100) das Verschieben des Kopfes (100) entlang des Griffs (60) umfasst.

14. Verfahren nach Anspruch 12, des Weiteren umfassend das Verwenden der Vorrichtung (10) zum Einsetzen eines Reifeneinsatzes (12) in ein Inneres des Reifens (2) vor dem Positionieren des Abschnitts der zweiten Reifenwulst unter dem Felgenflansch (5).

15. Verfahren nach Anspruch 14, wobei das Reifenwulstrad (124) eine kegelstumpfförmige Fläche (125) aufweist, und wobei das Einsetzen des Reifeneinsatzes (12) das Drehen der Vorrichtung (10) um einen Umfang der Felge (4) herum umfasst, dergestalt, dass ein Hauptkörper (122) des Kopfes (100) den Reifeneinsatz (12) radial nach außen an dem Felgenflansch (5) vorbei drückt und die kegelstumpfförmige Fläche (125) den Reifeneinsatz (12) über den Felgenflansch (5) und in das Innere des Reifens (2) drückt.

16. Verfahren nach Anspruch 12, des Weiteren umfassend das Platzieren des Reifenwulsthakens (126) unter die Reifenwulst (3, 3a, 3b) dergestalt, dass der Reifenwulsthaken (126) die Vorrichtung (10) während des Drehschrittes niederhält.

17. Verfahren zum Demontieren eines Reifens (2), der Reifenwülste (3, 3a, 3b) aufweist, von einem Rad, das eine Nabe (6) und eine Felge (4) mit einem Felgenflansch (5) und einem Felgenbett (9) aufweist, wobei das Verfahren umfasst:
Montieren einer Vorrichtung (10) an dem Rad, wobei die Vorrichtung (10) eine Nabenanbringungsvorrichtung zum Befestigen der Vorrichtung (10) an dem Rad mittels der Nabe (6), einen Griff (60), der an der Nabenanbringungsvorrichtung angelenkt ist, und einen Kopf (100), der verschiebbar an dem Griff (60) montiert ist, aufweist, wobei der Kopf (100) eine erste Seite (120) aufweist, die ein Reifenwulstrad (124) aufweist, und eine zweite Seite (160) aufweist, die eine Hebelplattform (164) und ein Reifendemontagehorn (168) aufweist;
Positionieren der Vorrichtung (10) in einer solchen Weise, dass die erste Seite (120) des Kopfes (100) eine erste Seite (120) der Felge (4) kontaktiert, und Verwenden des Reifenwulstrades (124), um eine erste Reifenwulst von der Felge (4) zu lösen;
Schwenken der Vorrichtung (10) um den Griff (60), um die zweite Seite (160) des Kopfes (100) so zu positionieren, dass sie dem Reifen (2) zugewandt ist, wobei die Hebelplattform (164) eine Außenfläche der Felge (4) kontaktiert;
Bewegen der Reifenwulst (3, 3a, 3b) von der Felge (4) fort und auf das Reifendemontagehorn (168); und
Drehen der Vorrichtung (10), um das Reifendemontagehorn (168) zu veranlassen, die Reifenwulst (3, 3a, 3b) über den Felgenflansch (5) zu heben.

18. Verfahren nach Anspruch 17, wobei das Verwenden des Reifenwulstrades (124) zum Lösen der Reifenwulst (3, 3a, 3b) das Herunterdrücken des Griffs (60), um das Reifenwulstrad (124) gegen die Reifenwulst (3, 3a, 3b) zu drücken, und das Drehen des Griffs (60) um den Umfang des Rades umfasst, um zu veranlassen, dass eine Außenfläche des Reifenwulstrades (124) einen Druck an eine Wand des Reifens (2) anlegt, um die Reifenwulst (3, 3a, 3b) zu lösen und die Reifenwulst (3, 3a, 3b) in das Felgenbett (9) zu drängen.

19. Verfahren nach Anspruch 18, des Weiteren umfassend die Schritte des Abnehmens der Vorrichtung (10) von dem Rad und des Wiederansetzens der Vorrichtung (10) so, dass die erste Seite (120) des Kopfes (100) mit einer zweiten Seite der Felge (4) in Kontakt steht, und des Verwendens des Reifenwulstrades (124) zum Lösen einer zweiten Wulst des Reifens (2), um die zweite Wulst in das Felgenbett (9) zu drücken, vor dem Schwenkschritt.

20. Verfahren nach Anspruch 17, des Weiteren umfassend das Verwenden eines Montiereisens (230) zum Heben der Reifenwulst (3, 3a, 3b) auf das Reifendemontagehorn (168) durch Hebeln des Montiereisens (230) gegen die Hebelplattform (164).

21. Verfahren zum Demontieren eines ersten Reifens, der Reifenwülste (3, 3a, 3b) aufweist, von einem Rad, das eine Nabe (6) und eine Felge (4) mit einem Felgenflansch (5) und einem Felgenbett (9) aufweist, und zum Montieren eines zweiten Reifens auf das Rad, wobei das Verfahren umfasst:
(a) Demontieren des ersten Reifens durch:
Montieren einer Vorrichtung (10) an dem Rad, wobei die Vorrichtung (10) eine Nabenanbringungsvorrichtung zum Befestigen der Vorrichtung (10) an dem Rad mittels der Nabe (6), einen Griff (60), der an der Nabenanbringungsvorrichtung angelenkt ist, und einen Kopf (100), der verschiebbar an dem Griff (60) montiert ist, aufweist, wobei der Kopf (100) eine erste Seite (120) aufweist, die ein Reifenwulstrad (124) aufweist, und eine zweite Seite (160) aufweist, die eine Hebelplattform (164) und ein Reifendemontagehorn (168) aufweist;
Positionieren der Vorrichtung (10) in einer solchen Weise, dass die erste Seite (120) des Kopfes (100) die Felge (4) kontaktiert, und Verwenden des Reifenwulstrades (124), um eine Reifenwulst (3, 3a, 3b) von der Felge (4) zu lösen;
Abnehmen der Vorrichtung (10) von dem Rad und Wiederansetzen der Vorrichtung (10) so, dass die erste Seite (120) des Kopfes (100) mit einer zweiten Seite der Felge (4) in Kontakt steht, und Verwenden des Reifenwulstrades (124) zum Lösen einer zweiten Wulst des ersten Reifens, um die zweite Wulst in das Felgenbett (9) zu drücken;
Schwenken der Vorrichtung (10) um den Griff (60), um die zweite Seite (160) des Kopfes (100) so zu positionieren, dass sie dem ersten Reifen zugewandt ist, wobei die Hebelplattform (164) eine Außenfläche der Felge (4) kontaktiert;
Bewegen der Reifenwulst (3, 3a, 3b) von der Felge (4) fort und auf das Reifendemontagehorn (168); und
Drehen der Vorrichtung (10), um das Reifendemontagehorn (168) zu veranlassen, die Reifenwulst (3, 3a, 3b) über den Felgenflansch (5) zu heben; und
Demontieren des ersten Reifens von dem Rad; und
(b) Montieren des zweiten Reifens durch:
Ausrichten und Positionieren des Kopfes (100) so, dass die erste Seite (120) der Felge (4) zugewandt ist und der zweite Reifen und die Felgenausrichtungsnase (121) mit der Felge (4) in Kontakt stehen;
Einsetzen der ersten Reifenwulst in die Felge (4);
Positionieren eines Abschnitts der zweiten Reifenwulst unter dem Felgenflansch (5), und Positionieren der Vorrichtung (10) so, dass sich das Reifenwulstrad (124) jenseits des Felgenflansches (5) befindet und der Reifenwulsthaken (126) sich zwischen der Felge (4) und dem Reifen (2) befindet; und
Drehen des Griffs (60), um das Reifenwulstrad (124) zu veranlassen, sich zu drehen und die zweite Reifenwulst in die Felge (4) zu drücken.

## Revendications

1. Appareil (10) permettant d'installer et de retirer un pneu (2) possédant des talons de pneu (3, 3a, 3b) sur une roue possédant un moyeu (6) et une jante (4) avec une joue de jante (5) et un creux de jante (9), l'appareil (10) comprenant :
un élément de fixation de moyeu pour fixer l'appareil (10) à la roue au moyen du moyeu (6) ;
un manche (60) possédant une première extrémité articulée sur l'élément de fixation de moyeu ; et
une tête (100) pouvant être fixée à une position souhaitée le long du manche (60), la tête (100) comportant un premier côté (120) possédant un ou plusieurs éléments configurés pour pousser le talon de pneu (3, 3a, 3b) axialement vers l'extérieur par rapport au moyeu (6), et un second côté (160) possédant un ou plusieurs éléments configurés pour pousser le talon de pneu (3, 3a, 3b) dans le creux de jante (9), dans lequel un pivotement du manche (60) par rapport au moyeu (6) positionne sélectivement le premier côté (120) ou le second côté (160) pour une interaction avec la joue de jante (5),
dans lequel le premier côté (120) comporte une corne de retrait de pneu (168) configurée pour guider le pneu (2) radialement vers l'extérieur et autour de la joue de jante (5), et
le premier côté (120) comporte en outre une plate-forme de levier (164) configurée pour aider un utilisateur à soulever le talon de pneu (3, 3a, 3b) sur la corne de retrait de pneu (168) à l'aide d'un démonte-pneu (230).

2. Appareil (10) selon la revendication 1, dans lequel le second côté (160) comporte une roulette de talon de pneu (124) configurée pour pousser le talon de pneu (3, 3a, 3b) dans le creux de jante (9) et le manche (60) est monté pour être tourné par un utilisateur autour du moyeu (6) de sorte que la roulette se déplace autour de la jante (4).

3. Appareil (10) selon la revendication 2, dans lequel le second côté (160) comporte en outre un crochet de talon de pneu (126) configuré pour maintenir l'appareil (10) contre la jante (4) pendant la rotation du manche (60).

4. Appareil (10) selon la revendication 2, dans lequel la roulette de talon de pneu (124) est montée rotative sur la tête (100) et comporte une surface tronconique (125) positionnée pour entrer en contact avec le pneu (2).

5. Appareil (10) selon la revendication 2, dans lequel le second côté (160) comprend en outre une patte d'alignement de jante (121), disposée adjacente à la roulette de talon de pneu (124), configurée pour positionner l'appareil (10) de sorte que la roulette de talon de pneu (124) soit légèrement décalée par rapport à la jante (4) de sorte qu'elle ne génère pas de friction en tirant sur la jante (4).

6. Appareil (10) selon la revendication 1, dans lequel l'élément de fixation de moyeu comprend un axe (20) avec de première et seconde extrémités, la première extrémité de l'axe (20) étant fixée au manche (60) et la seconde extrémité possédant un dispositif de retenue d'axe (40) sur celle-ci.

7. Appareil (10) selon la revendication 6, dans lequel la première extrémité de l'axe (20) comporte un siège de moyeu conique, et le dispositif de retenue d'axe (40) comporte un siège de moyeu conique.

8. Appareil (10) selon la revendication 6, dans lequel le dispositif de retenue d'axe (40) est configuré pour être monté amovible sur la seconde extrémité pour maintenir solidement l'axe (20) à l'intérieur du moyeu (6).

9. Appareil (10) selon la revendication 1, dans lequel le second côté (160) comporte une partie configurée pour supporter l'un des talons de pneu (3, 3a, 3b) à l'écart de la jante (4) pendant l'installation d'un fond de pneu (12) dans la jante (4).

10. Appareil (10) selon la revendication 1, dans lequel une partie du manche (60) le long de laquelle la tête (100) coulisse a une section transversale carrée.

11. Appareil (10) selon la revendication 9, dans lequel la tête (100) est fixée en position le long du manche (60) par un mécanisme de serrage comprenant des plaques de serrage sollicitées par ressort (202) qui appliquent une force de serrage au manche (60).

12. Procédé d'installation d'un pneu (2) possédant de premier et second talons de pneu sur une roue possédant un moyeu (6) et une jante (4) avec une joue de jante (5) et un creux de jante (9), le procédé comprenant :
le montage d'un appareil (10) sur la roue, l'appareil (10) comportant un dispositif de fixation de moyeu pour fixer l'appareil (10) à la roue au moyen du moyeu (6), un manche (60) monté pivotant sur le dispositif de fixation de moyeu, et une tête (100) montée coulissante sur le manche (60), la tête (100) comportant un premier côté (120) possédant une roulette de talon de pneu (124), et un crochet de talon de pneu (126) ;
l'orientation et le positionnement de la tête (100) avec le premier côté (120) face à la jante (4) et au pneu (2) ;
l'insertion du premier talon de pneu dans la jante (4) ;
le positionnement d'une partie du second talon de pneu sous la joue de jante (5) et le positionnement de l'appareil (10) avec la roulette de talon de pneu (124) au-delà de la joue de jante (5) et le crochet de talon de pneu (126) entre la jante (4) et le pneu (2) ; et
la rotation du manche (60) pour faire tourner la roulette de talon de pneu (124) et enfoncer le second talon de pneu dans la jante (4),
dans lequel la tête (100) comporte en outre une patte d'alignement de jante (121) et l'orientation et le positionnement incluent le positionnement de la tête (100) de manière que la patte d'alignement de jante (121) soit en contact avec la jante (4).

13. Procédé selon la revendication 12, dans lequel le positionnement de la tête (100) inclut le coulissement de la tête (100) le long du manche (60).

14. Procédé selon la revendication 12, comprenant en outre l'utilisation de l'appareil (10) pour insérer un fond de pneu (12) dans un intérieur du pneu (2), avant de positionner la partie du second talon de pneu sous la joue de jante (5).

15. Procédé selon la revendication 14, dans lequel la roulette de talon de pneu (124) a une surface tronconique (125) et dans lequel l'insertion du fond de pneu (12) inclut la rotation de l'appareil (10) autour d'une circonférence de la jante (4) de manière qu'un corps principal (122) de la tête (100) pousse le fond de pneu (12) radialement vers l'extérieur au-delà de la joue de jante (5) et la surface tronconique (125) presse le fond de pneu (12) par-dessus la joue de jante (5) et à l'intérieur du pneu (2).

16. Procédé selon la revendication 12, comprenant en outre le placement du crochet de talon de pneu (126) sous le talon de pneu (3, 3a, 3b) de manière que le crochet de talon de pneu (126) maintienne l'appareil (10) vers le bas pendant l'étape de rotation.

17. Procédé permettant de retirer un pneu (2) possédant des talons de pneu (3, 3a, 3b) d'une roue possédant un moyeu (6) et une jante (4) avec une joue de jante (5) et un creux de jante (9), le procédé comprenant :
le montage d'un appareil (10) sur la roue, l'appareil (10) comportant un dispositif de fixation de moyeu pour fixer l'appareil (10) à la roue au moyen du moyeu (6), un manche (60) monté pivotant sur le dispositif de fixation de moyeu, et une tête (100) montée coulissante sur le manche (60), la tête (100) possédant un premier côté (120) comportant une roue de talon de pneu (124) et un second côté (160) comportant une plate-forme de levier (164) et une corne de retrait de pneu (168) ;
le positionnement de l'appareil (10) avec le premier côté (120) de la tête (100) en contact avec un premier côté (120) de la jante (4) et l'utilisation de la roulette de talon de pneu (124) pour déloger un premier talon de pneu de la jante (4) ;
le pivotement de l'appareil (10) autour du manche (60) pour positionner le second côté (160) de la tête (100) face au pneu (2) avec la plate-forme de levier (164) en contact avec une surface extérieure de la jante (4) ;
le déplacement du talon de pneu (3, 3a, 3b) à l'écart de la jante (4) et sur la corne de retrait de pneu (168) ; et
la rotation de l'appareil (10) pour amener la corne de retrait de pneu (168) à soulever le talon de pneu (3, 3a, 3b) par-dessus la joue de jante (5).

18. Procédé selon la revendication 17, dans lequel l'utilisation de la roulette de talon de pneu (124) pour déloger le talon de pneu (3, 3a, 3b) inclut le fait d'appuyer vers le bas sur le manche (60) pour appuyer la roulette de talon de pneu (124) contre le talon de pneu (3, 3a, 3b) et une rotation du manche (60) autour d'une circonférence de la roue pour amener une surface extérieure de la roulette de talon de pneu (124) à appliquer une pression contre une paroi du pneu (2) pour déloger le talon de pneu (3,3a, 3b) et forcer le talon de pneu (3,3a, 3b) dans le creux de jante (9).

19. Procédé selon la revendication 18, comprenant en outre les étapes consistant à retirer l'appareil (10) de la roue et à le remonter avec le premier côté (120) de la tête (100) en contact avec un second côté de la jante (4) et à utiliser la roulette de talon de pneu (124) pour déloger un second talon du pneu (2) pour pousser le second talon dans le creux de jante (9), avant l'étape de pivotement.

20. Procédé selon la revendication 17, comprenant en outre l'utilisation d'un démonte-pneu (230) pour soulever le talon de pneu (3, 3a, 3b) sur la corne de retrait de pneu (168) en faisant levier avec le démonte-pneu (230) contre la plateforme de levier (164).

21. Procédé permettant de retirer un premier pneu possédant des talons de pneu (3, 3a, 3b) d'une roue possédant un moyeu (6) et une jante (4) avec une joue de jante (5) et un creux de jante (9) et d'installer un second pneu sur la roue, le procédé comprenant :
(a) le retrait du premier pneu par :
le montage d'un appareil (10) sur la roue, l'appareil (10) comportant un dispositif de fixation de moyeu pour fixer l'appareil (10) à la roue au moyen du moyeu (6), un manche (60) monté pivotant sur le dispositif de fixation de moyeu, et une tête (100) montée coulissante sur le manche (60), la tête (100) possédant un premier côté (120) comportant une roue de talon de pneu (124) et un second côté (160) comportant une plate-forme de levier (164) et une corne de retrait de pneu (168) ;
le positionnement de l'appareil (10) avec le premier côté (120) de la tête (100) en contact avec la jante (4) et l'utilisation de la roulette de talon de pneu (124) pour déloger un talon de pneu (3, 3a, 3b) de la jante (4) ;
le retrait de l'appareil (10) de la roue et son remontage avec le premier côté (120) de la tête (100) en contact avec un second côté de la jante (4) et l'utilisation de la roulette de talon de pneu (124) pour déloger un second talon du premier pneu pour pousser le second talon dans le creux de jante (9) ;
le pivotement de l'appareil (10) autour du manche (60) pour positionner le second côté (160) de la tête (100) face au premier pneu avec la plate-forme de levier (164) en contact avec une surface extérieure de la jante (4) ;
le déplacement du talon de pneu (3, 3a, 3b) à l'écart de la jante (4) et sur la corne de retrait de pneu (168) ; et
la rotation de l'appareil (10) pour amener la corne de retrait de pneu (168) à soulever le talon de pneu (3, 3a, 3b) par-dessus la joue de jante (5) ; et
le retrait du premier pneu de la roue ; et
(b) l'installation du second pneu par :
l'orientation et le positionnement de la tête (100) avec le premier côté (120) face à la jante (4) et le second pneu et la patte d'alignement de jante (121) en contact avec la jante (4) ;
l'insertion du premier talon de pneu dans la jante (4) ;
le positionnement d'une partie du second talon de pneu sous la joue de jante (5) et le positionnement de l'appareil (10) avec la roulette de talon de pneu (124) au-delà de la joue de jante (5) et le crochet de talon de pneu (126) entre la jante (4) et le pneu (2) ; et
la rotation du manche (60) pour faire tourner la roulette de talon de pneu (124) et enfoncer le second talon de pneu dans la jante (4).
